(19) Europäisches Patentamt / European Patent Office / Office européen des brevets

(11) **EP 4 175 167 A1**

(12) **EUROPEAN PATENT APPLICATION**
published in accordance with Art. 153(4) EPC

(43) Date of publication:
03.05.2023 Bulletin 2023/18

(51) International Patent Classification (IPC):
**H02S 40/32** (2014.01)

(21) Application number: 21841697.2

(22) Date of filing: 13.07.2021

(52) Cooperative Patent Classification (CPC):
**H02J 3/38; H02J 7/35; H02M 7/48; H02S 40/30; H02S 40/32;** Y02E 10/56

(86) International application number:
PCT/CN2021/106045

(87) International publication number:
WO 2022/012540 (20.01.2022 Gazette 2022/03)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 16.07.2020 CN 202010687357

(71) Applicant: **Huawei Digital Power Technologies Co., Ltd.**
**Shenzhen, Guangdong 518043 (CN)**

(72) Inventors:
• **GAO, Yongbing**
**Shenzhen, Guangdong 518129 (CN)**
• **LIU, Qinwei**
**Shenzhen, Guangdong 518129 (CN)**
• **JIANG, Niantao**
**Shenzhen, Guangdong 518129 (CN)**

(74) Representative: **Maiwald GmbH**
**Engineering**
**Elisenhof**
**Elisenstrasse 3**
**80335 München (DE)**

(54) **COMMON MODE CURRENT CONTROLLER FOR INVERTER**

(57)     A common mode current controller (600) of an inverter includes switches (604, 606) and an impedance correction circuit (602). One end of the impedance correction circuit (602) is grounded, and the other end is connected to one end of each of the switches (604, 606). The other end of each of the switches (604, 606) is connected to one of a positive terminal and a negative terminal of a direct current busbar capacitor. When a midpoint-to-ground voltage (BUSN) of the direct current busbar capacitor exceeds a threshold range, the switches (604, 606) are closed to adjust impedance matching between a positive terminal-to-ground equivalent impedance ($RES_{positive}$) of the direct current busbar capacitor and a negative terminal-to-ground equivalent impedance ($RES_{negative}$) of the direct current busbar capacitor, so that the inverter can pre-control a magnitude of a common mode current generated when the inverter is grid-tied, thereby reducing impact of a common mode current generated at a grid-tied instant.

FIG. 1

**Description**

This application claims priority to Chinese Patent Application No. 202010687357.7, filed with the China National Intellectual Property Administration on July 16, 2020 and entitled "COMMON MODE CURRENT CONTROLLER OF INVERTER", which is incorporated herein by reference in its entirety.

**TECHNICAL FIELD**

This application relates to the field of power electronics technologies, and in particular, to a common mode current controller of an inverter.

**BACKGROUND**

With increasing depletion of conventional energy sources such as oil and natural gas, new energy technologies such as photovoltaic (Photovoltaic, PV) power generation and wind power generation have been rapidly developed. The photovoltaic power generation is to convert solar radiation energy into electric energy by using a photovoltaic effect of a semiconductor material. For example, a direct current is generated under illumination by using a photovoltaic module. A photovoltaic power generation system and a wind turbine generator are usually direct current voltage sources. A generated direct current is converted into an alternating current by using an inverter, and then the alternating current is tied to a power grid for transmission. An alternating current output by a grid-tied inverter (Grid-Tie Inverter, IGT) needs to be synchronized with the mains in the power grid in terms of a frequency and a phase, so that the alternating current is transmitted by using the power grid.

In a current photovoltaic power generation system, a positive direct current busbar and a negative direct current busbar of an inverter usually float. Affected by factors such as a temperature, humidity, device aging, and improper operation, the positive direct current busbar and the negative direct current busbar may have asymmetric impedance to ground, leading to different potentials to ground, and further leading to a potential difference between a midpoint of a direct current busbar capacitor and a protective earthing (Protecting Earthing, PE) end, also referred to as a grounding end. The potential difference is essentially a common mode voltage. When the inverter is started and is tied to the power grid, in other words, at an instant of closing a grid-tied switch, a parasitic capacitor to ground of the photovoltaic power generation system, the photovoltaic power generation system, and the power grid form a loop, and a large common mode current is formed based on the common mode voltage, and is also referred to as a leakage current (Residual Current, RC). The common mode current formed at a grid-tied instant is usually large. A related potential difference may be as high as several hundred volts in a severe case, to interfere with detection and control of the system and cause an operation fault, for example, trigger an action of a leakage current protector and even lead to a disconnection of the grid-tied inverter.

In the conventional technology, to suppress impact and interference exerted, on a system, by a common mode current generated at an instant of closing a grid-tied switch, a manner is to modulate a common mode voltage by using a modulation algorithm such as pulse width modulation PWM. However, complex technical means such as phase detection and compensation are used in this manner, causing a complex structure. Another manner is to dispose a compensation power supply between a main circuit of an inverter and the ground, to compensate for an inverter-to-ground common mode voltage to obtain a target value. However, in this manner, the target value that is to be obtained through compensation needs to be calculated based on an alternating current port-to-ground voltage collected in real time, increasing a degree of complexity of a system design and costs of the system design. Still another manner is to dispose, for a relay between an AC end of a grid-tied inverter and a power grid, an impulse current suppression branch connected to the relay in parallel, to suppress an impulse leakage current generated at an instant of closing the relay. However, in this manner, whether to apply control cannot be determined before an alternating current switch of the inverter is closed. Consequently, a magnitude of a common mode current generated at a grid-tied instant cannot be effectively pre-controlled.

**SUMMARY**

This application aims to provide a common mode current controller of an inverter. An application scenario of the common mode current controller includes but is not limited to a grid-tied photovoltaic inverter, a photovoltaic system connected to a power grid, and another scenario in which impact of a common mode current generated at a grid-tied instant needs to be controlled. The common mode current controller includes a switch and an impedance correction circuit. One end of the impedance correction circuit is grounded, and the other end of the impedance correction circuit is connected to one end of the switch. The other end of the switch is connected to one terminal in a positive terminal and a negative terminal of the direct current busbar capacitor, so that the common mode current controller and at least a part of an intrinsic ground impedance part of the direct current busbar capacitor are connected in parallel between the one terminal in the positive terminal and the negative terminal of the direct current busbar capacitor and the ground. The common mode current controller is configured to: when a midpoint-to-ground voltage of the direct current busbar capacitor exceeds a threshold range, close the switch to adjust impedance matching between positive terminal-to-ground equivalent impedance of the direct current busbar capacitor and negative terminal-to-ground equivalent impedance of the direct current busbar capacitor, so that the inverter can pre-control a magnitude of a common mode current generated when the inverter is grid-tied. Therefore, the common mode current controller implements introduction of the impedance correction circuit and adjustment of impedance matching based on the midpoint-to-ground voltage of the direct current busbar capacitor, so that the magnitude of the common mode current generated when the inverter is grid-tied can be pre-controlled before a grid-tied switch of the inverter is closed, to help reduce a degree of complexity of a system design and reduce costs of the system design.

According to a first aspect, an embodiment of this application provides a common mode current controller of an inverter. The common mode current controller is connected between a direct current busbar capacitor of the inverter and a direct current input voltage source of the inverter, a positive terminal and a negative terminal of the direct current busbar capacitor are respectively connected to a positive terminal and a negative terminal of the direct current input voltage source, and the common mode current controller includes a switch and an impedance correction circuit. One end of the impedance correction circuit is grounded, the other end of the impedance correction circuit is connected to one end of the switch, and the other end of the switch is connected to one terminal in the positive terminal and the negative terminal of the direct current busbar capacitor, so that the common mode current controller and at least a part of an intrinsic ground impedance part of the direct current busbar capacitor are connected in parallel between the one terminal in the positive terminal and the negative terminal of the direct current busbar capacitor and the ground. The common mode current controller is configured to: when a midpoint-to-ground voltage of the direct current busbar capacitor exceeds a threshold range, close the switch to adjust impedance matching between positive terminal-to-ground equivalent impedance of the direct current busbar capacitor and negative terminal-to-ground equivalent impedance of the direct current busbar capacitor, so that the inverter can pre-control a magnitude of a common mode current generated when the inverter is grid-tied.

In the technical solution described in the first aspect, introduction of the impedance correction circuit and adjustment of impedance matching are implemented based on the midpoint-to-ground voltage of the direct current busbar capacitor, so that the magnitude of the common mode current generated when the inverter is grid-tied can be pre-controlled before a grid-tied switch of the inverter is closed, to help reduce a degree of complexity of a system design and reduce costs of the system design.

According to the first aspect, in a possible implementation, the midpoint-to-ground voltage of the direct current busbar capacitor is determined based on a positive terminal voltage of the direct current busbar capacitor and a negative terminal voltage of the direct current busbar capacitor.

Therefore, the midpoint-to-ground voltage is indirectly determined based on the positive terminal voltage and the negative terminal voltage of the direct current busbar capacitor, to implement introduction of the impedance correction circuit and adjustment of impedance matching based on the midpoint-to-ground voltage of the direct current busbar capacitor, so that the magnitude of the common mode current generated when the inverter is grid-tied can be pre-controlled before the grid-tied switch of the inverter is closed,, to help reduce the degree of complexity of the system design and reduce the costs of the system design.

According to the first aspect, in a possible implementation, the other end of the switch is connected to the positive terminal of the direct current busbar capacitor, and when the midpoint-to-ground voltage of the direct current busbar capacitor is greater than a first threshold, the switch is closed, so that the impedance correction circuit and a positive terminal part of the intrinsic ground impedance part of the direct current busbar capacitor are connected in parallel between the positive terminal of the direct current busbar capacitor and the ground, to reduce a magnitude of the positive terminal-to-ground equivalent impedance of the direct current busbar capacitor.

Therefore, the switch is closed, so that the impedance correction circuit and the positive terminal part of the intrinsic ground impedance part of the direct current busbar capacitor are connected in parallel, to implement introduction of the impedance correction circuit and adjustment of impedance matching based on the midpoint-to-ground voltage of the direct current busbar capacitor, so that the magnitude of the common mode current generated when the inverter is grid-tied can be pre-controlled before the grid-tied switch of the inverter is closed,, to help reduce the degree of complexity of the system design and reduce the costs of the system design.

According to the first aspect, in a possible implementation, the other end of the switch is connected to the negative terminal of the direct current busbar capacitor, and when the midpoint-to-ground voltage of the direct current busbar capacitor is less than a first threshold, the switch is closed, so that the impedance correction circuit and a negative terminal part of the intrinsic ground impedance part of the direct current busbar capacitor are connected in parallel between the negative terminal of the direct current busbar capacitor and the ground, to reduce a magnitude of the negative terminal-to-ground equivalent impedance of the direct current busbar capacitor.

Therefore, the switch is closed, so that the impedance correction circuit and the negative terminal part of the intrinsic ground impedance part of the direct current busbar capacitor are connected in parallel, to implement introduction of the impedance correction circuit and adjustment of impedance matching based on the midpoint-to-ground voltage of the direct current busbar capacitor, so that the magnitude of the common mode current generated when the inverter is grid-tied can be pre-controlled before the grid-tied switch of the inverter is closed, to help reduce the degree of complexity of the system design and reduce the costs of the system design.

According to the first aspect, in a possible implementation, an impedance value of the impedance correction circuit is adjustable, and the impedance value of the impedance correction circuit is adjusted, so that the positive terminal-to-ground equivalent impedance of the direct current busbar capacitor matches the negative terminal-to-ground equivalent impedance of the direct current busbar capacitor.

Therefore, the impedance value of the impedance correction circuit is adjusted, so that the positive terminal-to-ground equivalent impedance of the direct current busbar capacitor matches the negative terminal-to-ground equivalent impedance of the direct current busbar capacitor, to implement introduction of the impedance correction circuit and adjustment of impedance matching based on the midpoint-to-ground voltage of the direct current busbar capacitor, so that the magnitude of the common mode current generated when the inverter is grid-tied can be pre-controlled before the grid-tied switch of the inverter is closed, to help reduce the degree of complexity of the system design and reduce the costs of the system design.

According to the first aspect, in a possible implementation, the inverter includes a direct current-direct current DC-DC converter and a direct current-alternating current DC-AC converter, and the common mode current controller is between the DC-DC converter and the DC-AC converter.

Therefore, the common mode current controller is disposed between the DC-DC converter and the DC-AC converter, to perform control on a DC side of the inverter, and help simplify the system design and reduce the costs.

According to the first aspect, in a possible implementation, the common mode current controller is further configured to control to release a residual charge of a Y capacitor at a terminal of the inverter.

Therefore, the residual charge of the Y capacitor at the terminal of the inverter is released, which is conducive to system stability.

According to the first aspect, in a possible implementation, the inverter is a grid-tied inverter of a photovoltaic power generation system, and the common mode current controller is configured to control a magnitude of a common mode current generated when the photovoltaic power generation system is grid-tied.

Therefore, introduction of the impedance correction circuit and adjustment of impedance matching are implemented based on the midpoint ground voltage of the direct current busbar capacitor, so that the magnitude of the common mode current generated when the photovoltaic power generation system is grid-tied can be pre-controlled before a grid-tied switch of the photovoltaic power generation system is closed, to help reduce the degree of complexity of the system design and reduce the costs of the system design.

According to a second aspect, an embodiment of this application provides a common mode current controller of an inverter. The common mode current controller is connected between a direct current busbar capacitor of the inverter and a direct current input voltage source of the inverter, a positive terminal and a negative terminal of the direct current busbar capacitor are respectively connected to a positive terminal and a negative terminal of the direct current input voltage source, and the common mode current controller includes: a first switch, where one end of the first switch is connected to the positive terminal of the direct current busbar capacitor; a second switch, where one end of the second switch is connected to the negative terminal of the direct current busbar capacitor; a first impedance correction circuit, where one end of the first impedance correction circuit is grounded, and the other end of the first impedance correction circuit is connected to the other end of the first switch; and a second impedance correction circuit, where one end of the second impedance correction circuit is grounded, and the other end of the second impedance correction circuit is connected to the other end of the second switch. The common mode current controller is configured to: when a midpoint-to-ground voltage of the direct current busbar capacitor is greater than a first threshold, close the first switch, and open the second switch, so that the first impedance correction circuit and a positive terminal part of an intrinsic ground impedance part of the direct current busbar capacitor are connected in parallel between the positive terminal of the direct current busbar capacitor and the ground, to reduce a magnitude of positive terminal-to-ground equivalent impedance of the direct current busbar capacitor. The common mode current controller is configured to: when the midpoint-to-ground voltage of the direct current busbar capacitor is less than a second threshold, close the second switch, and open the first switch, so that the second impedance correction circuit and a negative terminal part of the intrinsic ground impedance part of the direct current busbar capacitor are connected in parallel between the negative terminal of the direct current busbar capacitor and the ground, to reduce a magnitude of negative terminal-to-ground equivalent impedance of the direct current busbar capacitor. The common mode current controller adjusts impedance matching between the positive terminal-to-ground equivalent impedance of the direct current busbar capacitor and the negative terminal-to-ground equivalent impedance of the direct current busbar capacitor, so that the inverter can pre-control a magnitude of a common mode current generated when the inverter is grid-tied.

In the technical solution described in the second aspect, introduction of the first impedance correction circuit or the second impedance correction circuit and adjustment of impedance matching are implemented based on the midpoint-to-ground voltage of the direct current busbar capacitor, so that the magnitude of the common mode current generated when the inverter is grid-tied can be pre-controlled before a grid-tied switch of the inverter is closed, to help reduce a degree of complexity of a system design and reduce costs of the system design.

According to the second aspect, in a possible implementation, the midpoint-to-ground voltage of the direct current busbar capacitor is determined based on a positive terminal voltage of the direct current busbar capacitor and a negative terminal voltage of the direct current busbar capacitor.

Therefore, the midpoint-to-ground voltage is indirectly determined based on the positive terminal voltage and the negative terminal voltage of the direct current busbar capacitor, to implement introduction of the impedance correction circuit and adjustment of impedance matching based on the midpoint-to-ground voltage of the direct current busbar capacitor, so that the magnitude of the common mode current generated when the inverter is grid-tied can be pre-controlled before the grid-tied switch of the inverter is closed, to help reduce the degree of complexity of the system design and reduce the costs of the system design.

According to the second aspect, in a possible implementation, an impedance value of the first impedance correction circuit and an impedance value of the second impedance correction circuit are both adjustable, and the impedance value of the first impedance correction circuit and the impedance value of the second impedance correction circuit are adjusted, so that the positive terminal-to-ground equivalent impedance of the direct current busbar capacitor matches the negative terminal-to-ground equivalent impedance of the direct current busbar capacitor.

Therefore, the impedance value of the first impedance correction circuit and the impedance value of the second impedance correction circuit are adjusted, so that the positive terminal-to-ground equivalent impedance of the direct current busbar capacitor matches the negative terminal-to-ground equivalent impedance of the direct current busbar capacitor, to implement introduction of an impedance correction circuit and adjustment of impedance matching based on the midpoint-to-ground voltage of the direct current busbar capacitor, so that the magnitude of the common mode current generated when the inverter is grid-tied can be pre-controlled before the grid-tied switch of the inverter is closed, to help reduce the degree of complexity of the system design and reduce the costs of the system design.

According to the second aspect, in a possible implementation, the inverter includes a direct current-direct current DC-DC converter and a direct current-alternating current DC-AC converter, and the common mode current controller is between the DC-DC converter and the DC-AC converter.

Therefore, the common mode current controller is disposed between the DC-DC converter and the DC-AC converter, to perform control on a DC side of the inverter, and help simplify the system design and reduce the costs.

According to the second aspect, in a possible implementation, the common mode current controller is further configured to control to release a residual charge of a Y capacitor at a terminal of the inverter.

Therefore, the residual charge of the Y capacitor at the terminal of the inverter is released, which is conducive to system stability.

According to the second aspect, in a possible implementation, the inverter is a grid-tied inverter of a photovoltaic power generation system, and the common mode current controller is configured to control a magnitude of a common mode current generated when the photovoltaic power generation system is grid-tied.

Therefore, introduction of the impedance correction circuit and adjustment of impedance matching are implemented based on the midpoint ground voltage of the direct current busbar capacitor, so that the magnitude of the common mode current generated when the photovoltaic power generation system is grid-tied can be pre-controlled before the grid-tied switch of the photovoltaic power generation system is closed, to help reduce the degree of complexity of the system design and reduce the costs of the system design.

According to a third aspect, an embodiment of this application provides a common mode current controller of an inverter. The common mode current controller is connected between a direct current busbar capacitor of the inverter and a direct current input voltage source of the inverter, a positive terminal and a negative terminal of the direct current busbar capacitor are respectively connected to a positive terminal and a negative terminal of the direct current input voltage source, and the common mode current controller includes: a single-pole triple-throw switch, where a non-movable end of the single-pole triple-throw switch is grounded, and a movable end of the single-pole triple-throw switch includes a first movable end, a second movable end, and a third movable end; a first impedance correction circuit, where one end of the first impedance correction circuit is connected to the first movable end of the single-pole triple-throw switch, and the other end of the first impedance correction part is connected to the positive terminal of the direct current busbar capacitor; and a second impedance correction circuit, where one end of the second impedance correction circuit is connected to the second movable end of the single-pole triple-throw switch, and the other end of the second impedance correction circuit is connected to the negative terminal of the direct current busbar capacitor. The common mode current controller is configured to: when a midpoint-to-ground voltage of the direct current busbar capacitor is greater than a first threshold, switch the single-pole triple-throw switch to the first movable end, so that the first impedance correction circuit and a positive terminal part of an intrinsic ground impedance part of the direct current busbar capacitor are connected in parallel between the positive terminal of the direct current busbar capacitor and the ground, to reduce a magnitude of positive terminal-to-ground equivalent impedance of the direct current busbar capacitor. The common mode current controller is configured to: when the midpoint-to-ground voltage of the direct current busbar capacitor is less than a second threshold, switch the single-pole triple-throw switch to the second movable end, so that the second impedance correction circuit and a negative terminal part of the intrinsic ground impedance part of the direct current busbar capacitor are connected in parallel between the negative terminal of the direct current busbar capacitor and the ground, to reduce a magnitude of negative terminal-to-ground equivalent impedance of the direct current busbar capacitor. The common mode current controller adjusts impedance matching between the positive terminal-to-ground equivalent impedance of the direct current busbar capacitor and the negative terminal-to-ground equivalent impedance of the direct current busbar capacitor, so that the inverter can pre-control a magnitude of a common mode current generated when the inverter is grid-tied.

In the technical solution described in the third aspect, introduction of the first impedance correction circuit or the second impedance correction circuit and adjustment of impedance matching are implemented based on the midpoint-to-ground voltage of the direct current busbar capacitor, so that the magnitude of the common mode current generated when the inverter is grid-tied can be pre-controlled before a grid-tied switch of the inverter is closed, to help reduce a degree of complexity of a system design and reduce costs of the system design.

According to the third aspect, in a possible implementation, the midpoint-to-ground voltage of the direct current busbar capacitor is determined based on a positive terminal voltage of the direct current busbar capacitor and a negative terminal voltage of the direct current busbar capacitor.

Therefore, the midpoint-to-ground voltage is indirectly determined based on the positive terminal voltage and the negative terminal voltage of the direct current busbar capacitor, to implement introduction of an impedance correction circuit and adjustment of impedance matching based on the midpoint-to-ground voltage of the direct current busbar capacitor, so that the magnitude of the common mode current generated when the inverter is grid-tied can be pre-controlled before the grid-tied switch of the inverter is closed, to help reduce the degree of complexity of the system design and reduce the costs of the system design.

According to the third aspect, in a possible implementation, an impedance value of the first impedance correction circuit and an impedance value of the second impedance correction circuit are both adjustable, and the impedance value of the first impedance correction circuit and the impedance value of the second impedance correction circuit are adjusted, so that the positive terminal-to-ground equivalent impedance of the direct current busbar capacitor matches the negative terminal-to-ground equivalent impedance of the direct current busbar capacitor.

Therefore, the impedance value of the first impedance correction circuit and the impedance value of the second impedance correction circuit are adjusted, so that the positive terminal-to-ground equivalent impedance of the direct current busbar capacitor matches the negative terminal-to-ground equivalent impedance of the direct current busbar capacitor, to implement introduction of an impedance correction circuit and adjustment of impedance matching based on the midpoint-to-ground voltage of the direct current busbar capacitor, so that the magnitude of the common mode current generated when the inverter is grid-tied can be pre-controlled before the grid-tied switch of the inverter is closed, to help reduce the degree of complexity of the system design and reduce the costs of the system design.

According to the third aspect, in a possible implementation, the inverter includes a direct current-direct current DC-DC converter and a direct current-alternating current DC-AC converter, and the common mode current controller is between the DC-DC converter and the DC-AC converter.

Therefore, the common mode current controller is disposed between the DC-DC converter and the DC-AC converter, to perform control on a DC side of the inverter, and help simplify the system design and reduce the costs.

According to the third aspect, in a possible implementation, the common mode current controller is further configured to control to release a residual charge of a Y capacitor at a terminal of the inverter.

Therefore, the residual charge of the Y capacitor at the terminal of the inverter is released, which is conducive to system stability.

According to the third aspect, in a possible implementation, the inverter is a grid-tied inverter of a photovoltaic power generation system, and the common mode current controller is configured to control a magnitude of a common mode current generated when the photovoltaic power generation system is grid-tied.

Therefore, introduction of the impedance correction circuit and adjustment of impedance matching are implemented based on the midpoint ground voltage of the direct current busbar capacitor, so that the magnitude of the common mode current generated when the photovoltaic power generation system is grid-tied can be pre-controlled before a grid-tied switch of the photovoltaic power generation system is closed, to help reduce the degree of complexity of the system design and reduce the costs of the system design.

According to a fourth aspect, an embodiment of this application provides a common mode current controller of an inverter. The common mode current controller is connected between a direct current busbar capacitor of the inverter and a direct current input voltage source of the inverter, a positive terminal and a negative terminal of the direct current busbar capacitor are respectively connected to a positive terminal and a negative terminal of the direct current input voltage source, and the common mode current controller includes: a first switch, where one end of the first switch is connected to the positive terminal of the direct current busbar capacitor; a second switch, where one end of the second switch is connected to the negative terminal of the direct current busbar capacitor; and an impedance correction circuit, where one end of the impedance correction circuit is grounded, and the other end of the impedance correction circuit is simultaneously connected to the other end of the first switch and the other end of the second switch. The common mode current controller is configured to: when a midpoint-to-ground voltage of the direct current busbar capacitor is greater than a first threshold, close the first switch, and open the second switch, so that the impedance correction circuit and a positive terminal part of an intrinsic ground impedance part of the direct current busbar capacitor are connected in parallel between the positive terminal of the direct current busbar capacitor and the ground, to reduce a magnitude of positive terminal-to-ground equivalent impedance of the direct current busbar capacitor. The common mode current controller is configured to: when the midpoint-to-ground voltage of the direct current busbar capacitor is less than a second threshold, close the second switch, and open the first switch, so that the impedance correction circuit and a negative terminal part of the intrinsic ground impedance part of the direct current busbar capacitor are connected in parallel between the negative terminal of the direct current busbar capacitor and the ground, to reduce a magnitude of negative terminal-to-ground equivalent impedance of the direct current busbar capacitor. The common mode current controller adjusts impedance matching between the positive terminal-to-ground equivalent impedance of the direct current busbar capacitor and the negative terminal-to-ground equivalent impedance of the direct current busbar capacitor, so that the inverter can pre-control a magnitude of a common mode current generated when the inverter is grid-tied.

In the technical solution described in the fourth aspect, introduction of the impedance correction circuit and adjustment of impedance matching are implemented based on the midpoint-to-ground voltage of the direct current busbar capacitor, so that the magnitude of the common mode current generated when the inverter is grid-tied can be pre-controlled before a grid-tied switch of the inverter is closed, to help reduce a degree of complexity of a system design and reduce costs of the system design.

According to the fourth aspect, in a possible implementation, the midpoint-to-ground voltage of the direct current busbar capacitor is determined based on a positive terminal voltage of the direct current busbar capacitor and a negative terminal voltage of the direct current busbar capacitor.

Therefore, the midpoint-to-ground voltage is indirectly determined based on the positive terminal voltage and the negative terminal voltage of the direct current busbar capacitor, to implement introduction of the impedance correction circuit and adjustment of impedance matching based on the midpoint-to-ground voltage of the direct current busbar capacitor, so that the magnitude of the common mode current generated when the inverter is grid-tied can be pre-controlled before the grid-tied switch of the inverter is closed, to help reduce the degree of complexity of the system design and reduce the costs of the system design.

According to the fourth aspect, in a possible implementation, an impedance value of the impedance correction circuit is adjustable, and the impedance value of the impedance correction circuit is adjusted, so that the positive terminal-to-ground equivalent impedance of the direct current busbar capacitor matches the negative terminal-to-ground equivalent impedance of the direct current busbar capacitor.

Therefore, the impedance value of the impedance correction circuit is adjusted, so that the positive terminal-to-ground equivalent impedance of the direct current busbar capacitor matches the negative terminal-to-ground equivalent impedance of the direct current busbar capacitor, to implement introduction of the impedance correction circuit and adjustment of impedance matching based on the midpoint-to-ground voltage of the direct current busbar capacitor, so that the magnitude of the common mode current generated when the inverter is grid-tied can be pre-controlled before the grid-tied switch of the inverter is closed, to help reduce the degree of complexity of the system design and reduce the costs of the system design.

According to the fourth aspect, in a possible implementation, the inverter includes a direct current-direct current DC-DC converter and a direct current-alternating current DC-AC converter, and the common mode current controller is between the DC-DC converter and the DC-AC converter.

Therefore, the common mode current controller is disposed between the DC-DC converter and the DC-AC converter, to perform control on a DC side of the inverter, and help simplify the system design and reduce the costs.

According to the fourth aspect, in a possible implementation, the common mode current controller is further configured to control to release a residual charge of a Y capacitor at a terminal of the inverter.

Therefore, the residual charge of the Y capacitor at the terminal of the inverter is released, which is conducive to system stability.

According to the fourth aspect, in a possible implementation, the inverter is a grid-tied inverter of a photovoltaic power generation system, and the common mode current controller is configured to control a magnitude of a common mode current generated when the photovoltaic power generation system is grid-tied.

Therefore, introduction of the impedance correction circuit and adjustment of impedance matching are implemented based on the midpoint ground voltage of the direct current busbar capacitor, so that the magnitude of the common mode current generated when the photovoltaic power generation system is grid-tied can be pre-controlled before a grid-tied switch of the photovoltaic power generation system is closed, to help reduce the degree of complexity of the system design and reduce the costs of the system design.

According to a fifth aspect, an embodiment of this application provides a common mode current control method for an inverter. A positive terminal and a negative terminal of a direct current busbar capacitor of the inverter are respectively connected to a positive terminal and a negative terminal of a direct current input voltage source of the inverter, and the common mode current control method includes: obtaining a midpoint-to-ground voltage of the direct current busbar capacitor; introducing an impedance correction circuit when the midpoint-to-ground voltage exceeds a threshold range, where the impedance correction circuit and at least a part of an intrinsic ground impedance part of the direct current busbar capacitor are connected in parallel between one terminal in the positive terminal and the negative terminal of the direct current busbar capacitor and the ground, to reduce a magnitude of positive terminal-to-ground equivalent impedance of the direct current busbar capacitor or a magnitude of negative terminal-to-ground equivalent impedance of the direct current busbar capacitor; and adjusting impedance matching between the positive terminal-to-ground equivalent impedance of the direct current busbar capacitor and the negative terminal-to-ground equivalent impedance of the direct current busbar capacitor, so that the inverter can pre-control a magnitude of a common mode current generated when the inverter is grid-tied.

In the technical solution described in the fifth aspect, introduction of the impedance correction circuit and adjustment of impedance matching are implemented based on the midpoint-to-ground voltage of the direct current busbar capacitor, so that the magnitude of the common mode current generated when the inverter is grid-tied can be pre-controlled before a grid-tied switch of the inverter is closed, to help reduce a degree of complexity of a system design and reduce costs of the system design.

According to the fifth aspect, in a possible implementation, the common mode current control method further includes: separately sampling a positive terminal voltage and a negative terminal voltage of the direct current busbar capacitor; and obtaining the midpoint-to-ground voltage based on the positive terminal voltage and the negative terminal voltage of the direct current busbar capacitor.

Therefore, the midpoint-to-ground voltage is indirectly determined based on the positive terminal voltage and the negative terminal voltage of the direct current busbar capacitor, to implement introduction of the impedance correction circuit and adjustment of impedance matching based on the midpoint-to-ground voltage of the direct current busbar capacitor, so that the magnitude of the common mode current generated when the inverter is grid-tied can be pre-controlled before the grid-tied switch of the inverter is closed, to help reduce the degree of complexity of the system design and reduce the costs of the system design.

According to the fifth aspect, in a possible implementation, the introducing the impedance correction circuit when the midpoint-to-ground voltage exceeds the threshold range includes: introducing the impedance correction circuit when the midpoint-to-ground voltage is greater than a first threshold, where the impedance correction circuit and a positive terminal part of the intrinsic ground impedance part of the direct current busbar capacitor are connected in parallel between the positive terminal of the direct current busbar capacitor and the ground, to reduce the magnitude of the positive terminal-to-ground equivalent impedance of the direct current busbar capacitor.

Therefore, the switch is closed, so that the impedance correction circuit and the positive terminal part of the intrinsic ground impedance part of the direct current busbar capacitor are connected in parallel, to implement introduction of the impedance correction circuit and adjustment of impedance matching based on the midpoint-to-ground voltage of the direct current busbar capacitor, so that the magnitude of the common mode current generated when the inverter is grid-tied can be pre-controlled before the grid-tied switch of the inverter is closed, to help reduce the degree of complexity of the system design and reduce the costs of the system design.

According to the fifth aspect, in a possible implementation, the introducing the impedance correction circuit when the midpoint-to-ground voltage exceeds the threshold range includes: introducing the impedance correction circuit when the midpoint-to-ground voltage is less than a first threshold, where the impedance correction circuit and a negative terminal part of the intrinsic ground impedance part of the direct current busbar capacitor are connected in parallel between the negative terminal of the direct current busbar capacitor and the ground, to reduce the magnitude of the negative terminal-to-ground equivalent impedance of the direct current busbar capacitor.

Therefore, the switch is closed, so that the impedance correction circuit and the negative terminal part of the intrinsic ground impedance part of the direct current busbar capacitor are connected in parallel, to implement introduction of the impedance correction circuit and adjustment of impedance matching based on the midpoint-to-ground voltage of the direct current busbar capacitor, so that the magnitude of the common mode current generated when the inverter is grid-tied can be pre-controlled before the grid-tied switch of the inverter is closed, to help reduce the degree of complexity of the system design and reduce the costs of the system design.

According to the fifth aspect, in a possible implementation, an impedance value of the impedance correction circuit is adjustable, and the impedance value of the impedance correction circuit is adjusted, so that the positive terminal-to-ground equivalent impedance of the direct current busbar capacitor matches the negative terminal-to-ground equivalent impedance of the direct current busbar capacitor.

Therefore, the impedance value of the impedance correction circuit is adjusted, so that the positive terminal-to-ground equivalent impedance of the direct current busbar capacitor matches the negative terminal-to-ground equivalent impedance of the direct current busbar capacitor, to implement introduction of the impedance correction circuit and adjustment of impedance matching based on the midpoint-to-ground voltage of the direct current busbar capacitor, so that the magnitude of the common mode current generated when the inverter is grid-tied can be pre-controlled before the grid-tied switch of the inverter is closed, to help reduce the degree of complexity of the system design and reduce the costs of the system design.

According to the fifth aspect, in a possible implementation, the inverter includes a direct current-direct current DC-DC converter and a direct current-alternating current DC-AC converter, and the impedance correction circuit is between the DC-DC converter and the DC-AC converter.

Therefore, the common mode current controller is disposed between the DC-DC converter and the DC-AC converter, to perform control on a DC side of the inverter, and help simplify the system design and reduce the costs.

According to the fifth aspect, in a possible implementation, the inverter is a grid-tied inverter of a photovoltaic power generation system, and the common mode current control method is used to control a magnitude of a common mode current generated when the photovoltaic power generation system is grid-tied.

Therefore, introduction of the impedance correction circuit and adjustment of impedance matching are implemented based on the midpoint ground voltage of the direct current busbar capacitor, so that the magnitude of the common mode current generated when the photovoltaic power generation system is grid-tied can be pre-controlled before a grid-tied switch of the photovoltaic power generation system is closed, to help reduce the degree of complexity of the system design and reduce the costs of the system design.

According to a sixth aspect, an embodiment of this application provides a photovoltaic power generation system. The photovoltaic power generation system includes a photovoltaic module, a direct current-alternating current inverter circuit, and a grid-tied filter. The direct current-alternating current inverter circuit is coupled between the photovoltaic module and the grid-tied inverter. The photovoltaic power generation system further includes the common mode current controller in any one of the foregoing aspects, configured to control the direct current-alternating current inverter circuit.

In the technical solution described in the sixth aspect, a magnitude of a common mode current generated when the direct current-alternating current inverter circuit is grid-tied can be pre-controlled before a grid-tied switch of the photovoltaic power generation system is closed, to help reduce a degree of complexity of a system design and reduce costs of the system design.

## BRIEF DESCRIPTION OF DRAWINGS

To describe technical solutions in embodiments of this application or in the background more clearly, the following describes the accompanying drawings used in embodiments of this application or in the background.

FIG. 1 is a schematic diagram of a structure of a photovoltaic power generation system including a common mode current controller of an inverter according to an embodiment of this application;

FIG. 2 is a schematic diagram of a circuit structure of a common mode current controller of an inverter in an implementation according to an embodiment of this application;

FIG. 3 is a schematic diagram of a circuit structure of a common mode current controller of an inverter in another implementation according to an embodiment of this application;

FIG. 4 is a schematic diagram of a circuit structure of a common mode current controller of an inverter in another implementation according to an embodiment of this application;

FIG. 5 is a schematic diagram of a circuit structure of a common mode current controller of an inverter in another implementation according to an embodiment of this application;

FIG. 6 is a schematic diagram of a circuit structure of a common mode current controller of an inverter in another implementation according to an embodiment of this application; and

FIG. 7 is a schematic flowchart of a common mode current control method for an inverter according to an embodiment of this application.

## DESCRIPTION OF EMBODIMENTS

Embodiments of this application aim to provide a common mode current controller of an inverter. An application scenario of the common mode current controller includes but is not limited to a grid-tied photovoltaic inverter, a photovoltaic system connected to a power grid, and another scenario in which impact of a common mode current generated at a grid-tied instant needs to be controlled. The common mode current controller includes a switch and an impedance correction circuit. One end of the impedance correction circuit is grounded, and the other end of the impedance correction circuit is connected to one end of the switch. The other end of the switch is connected to one terminal in a positive terminal and a negative terminal of the direct current busbar capacitor, so that the common mode current controller and at least a part of an intrinsic ground impedance part of the direct current busbar capacitor are connected in parallel between the one terminal in the positive terminal and the negative terminal of the direct current busbar capacitor and the ground. The common mode current controller is configured to: when a midpoint-to-ground voltage of the direct current busbar capacitor exceeds a threshold range, close the switch to adjust impedance matching between positive terminal-to-ground equivalent impedance of the direct current busbar capacitor and negative terminal-to-ground equivalent impedance of the direct current busbar capacitor, so that the inverter can pre-control a magnitude of a common mode current generated when the inverter is grid-tied. Therefore, the common mode current controller implements introduction of the impedance correction circuit and adjustment of impedance matching based on the midpoint-to-ground voltage of the direct current busbar capacitor, so that the magnitude of the common mode current generated when the inverter is grid-tied can be pre-controlled before a grid-tied switch of the inverter is closed, to help reduce a degree of complexity of a system design and reduce costs of the system design.

Embodiments of this application may be adjusted and improved based on a specific application environment. This is not specifically limited herein.

To make a person skilled in the art understand the technical solutions in this application better, the following describes the technical solutions in embodiments of this application with reference to the accompanying drawings in embodiments of this application.

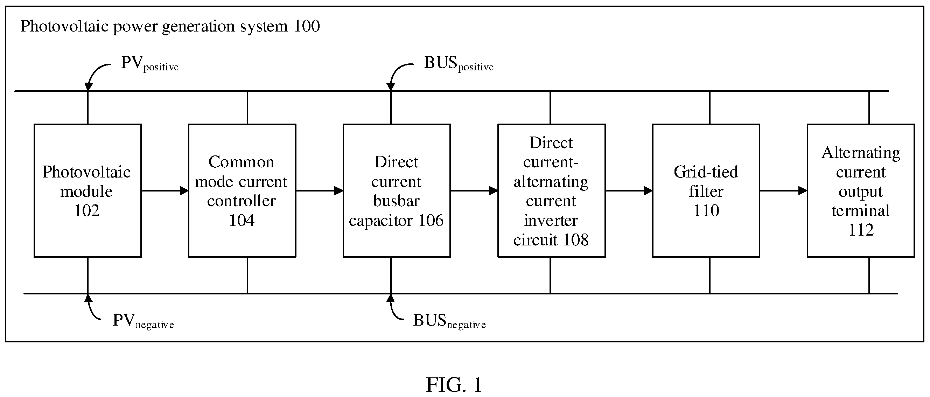

FIG. 1 is a schematic diagram of a structure of a photovoltaic power generation system including a common mode current controller of an inverter according to an embodiment of this application. As shown in FIG. 1, a photovoltaic power generation system 100 includes a photovoltaic module 102, a common mode current controller 104, a direct current busbar capacitor 106, a direct current-alternating current inverter circuit 108, a grid-tied filter 110, and an alternating current output terminal 112.

The photovoltaic module 102 converts solar radiation energy into a direct current based on a photovoltaic power generation effect, for example, by using a solar cell panel or a photovoltaic power generator set. The photovoltaic module 102 may be considered as an equivalent direct current voltage source 102 on a circuit. A positive electrode $PV_{positive}$ and a negative electrode $PV_{negative}$ of the direct current voltage source 102 are respectively connected to a positive terminal and a negative terminal of the common mode current controller 104, and the positive terminal and the negative terminal of the common mode current controller 104 are respectively connected to a positive terminal and a negative terminal of the direct current busbar capacitor 106. In other words, the direct current voltage source 102, the common mode current controller 104, and the direct current busbar capacitor 106 are connected in parallel between two busbars. It should be understood that a direct current busbar is a connecting line of a positive electrode or a negative electrode on a direct current side of the inverter; and the direct current busbar capacitor is a capacitor between direct current busbars. Specifically, the positive terminal and the negative terminal of the direct current busbar capacitor 106 are respectively connected to a positive terminal and a negative terminal of an input end of the direct current-alternating current inverter circuit 108. The positive terminal of the direct current busbar capacitor 106 and the positive terminal of the input end of the direct current-alternating current inverter circuit 108 are connected to be used as a positive direct current busbar, and the negative terminal of the direct current busbar capacitor 106 and the negative terminal of the input end of the direct current-alternating current inverter circuit 108 are connected to be used as a negative direct current busbar. In a possible implementation, a midpoint terminal of the direct current-alternating current inverter circuit 108 is connected to a negative electrode of a positive busbar capacitor and a positive electrode of a negative busbar capacitor, to be used as a neutral wire. One end of the grid-tied filter 110 is connected to an output end of the direct current-alternating current inverter circuit 108, and the other end is connected to the alternating current output terminal 112. The grid-tied filter 110 is configured to: filter out a high frequency component, and control an output voltage/current required for being connected to a power grid. The alternating current output terminal 112 serves as an external output interface of the photovoltaic power generation system 100, and electric energy generated by the photovoltaic power generation system 100 is output to the power grid by using the alternating current output terminal 112. To be tied to the power grid, an alternating current output by the direct current-alternating current inverter circuit 108 needs to be synchronized with the mains in the power grid in terms of a frequency and a phase. The photovoltaic power generation system 100 may further include a direct current-direct current conversion part (not shown). The direct current-direct current conversion part is disposed between the photovoltaic module 102 and the common mode current controller 104, or between the common mode current controller 104 and the direct current busbar capacitor 106, and is configured to adjust the direct current output by the photovoltaic module 102, to match the direct current-alternating current inverter circuit 108.

Still refer to FIG. 1. The common mode current controller 104 is disposed on a direct current input side of the direct current-alternating current inverter circuit 108, in other words, between the photovoltaic module 102 and the direct current busbar capacitor 106, to improve a capability of the photovoltaic power generation system 100 to resist impact of a common mode current generated at a grid-tied instant, and further help reduce a risk that the inverter is disconnected from the power grid when a common mode voltage suddenly increases and there are asymmetric impedance. The common mode current controller 104 collects a midpoint-to-ground voltage BUSN (not shown) of the direct current busbar capacitor 106, or indirectly obtains a midpoint-to-ground voltage BUSN of the direct current busbar capacitor 106 by collecting a positive terminal-to-ground voltage $BUS_{positive}$ and a negative terminal-to-ground voltage $BUS_{negative}$ of the direct current busbar capacitor 106. When BUSN exceeds a threshold range, a magnitude of positive terminal-to-ground equivalent impedance of the direct current busbar capacitor 106 or a magnitude of negative terminal-to-ground equivalent impedance of the direct current busbar capacitor 106 is selectively reduced, to adjust impedance matching between the positive terminal-to-ground equivalent impedance of the direct current busbar capacitor 106 and the negative terminal-to-ground equivalent impedance of the direct current busbar capacitor 106, and further pre-control a magnitude of a common mode current generated when the inverter is grid-tied, in other words, pre-control a magnitude of a common mode impulse current (leakage current).

In some example embodiments, the photovoltaic module 102 may be replaced with another new energy power generation device that generates a direct current, for example, a wind turbine generator or a hydroelectric generator, or a direct current energy storage apparatus, for example, a dry cell or a storage battery.

In some example embodiments, the direct current-alternating current inverter circuit 108 may be a three-phase three-level inverter, or may be another three-phase multi-level inverter, or may be another type of inverter that can implement direct current-to-alternating current conversion.

In some example embodiments, the midpoint-to-ground voltage BUSN (not shown) of the direct current busbar capacitor 106, the positive terminal-to-ground voltage $BUS_{positive}$, of the direct current busbar capacitor 106, and the negative terminal-to-ground voltage $BUS_{negative}$ of the direct current busbar capacitor 106 are collected in a direct current voltage measurement method in a conventional technical means. The midpoint-to-ground voltage BUSN of the direct current busbar capacitor 106 may be obtained by using an indirect means in an actual application. For example, the positive terminal-to-ground voltage $BUS_{positive}$, and the negative terminal-to-ground voltage $BUS_{negative}$ of the direct current busbar capacitor 106 are collected, and then a sum of $BUS_{positive}$ and $BUS_{negative}$ is divided by two.

In some example embodiments, the photovoltaic power generation system 100 may further include a direct current-direct current DC-DC converter (not shown). The DC-DC converter is disposed between the photovoltaic module 102 and the direct current-alternating current inverter circuit 108, and is configured to convert a fixed direct current output by the photovoltaic module 102 into a changeable direct current voltage, to adapt to a corresponding voltage type required by the direct current-alternating current inverter circuit 108. The DC-DC converter may be in a pulse width modulation manner or a frequency modulation manner, may include necessary elements such as a control chip, an inductor, and a capacitor, and may be a boost converter, a buck converter, or a buck-boost converter. When the photovoltaic power generation system 100 includes the DC-DC converter, the DC-DC converter receives an input voltage from the photovoltaic module 102, converts the input voltage, and effectively outputs a fixed voltage. A positive electrode and a negative electrode of an output end of the DC-DC converter are respectively connected to the positive terminal and the negative terminal of the common mode current controller 104. In other words, the DC-DC converter, the common mode current controller 104, and the direct current busbar capacitor 106 are connected in parallel. These may be adjusted and improved based on a specific application environment, and are not specifically limited herein.

In some example embodiments, the common mode current controller 104 is further configured to control to release a residual charge of a Y capacitor at a terminal of the inverter. In a possible implementation, the Y capacitor at the terminal is a capacitor on an AC side of the inverter.

In some example embodiments, the photovoltaic power generation system 100 may include a plurality of parallel grid-tied inverters, and each grid-tied inverter and the common mode current controller 104 include a same device and similar structures, to have the improved capability of resisting the impact of the common mode current generated at the grid-tied instant of the photovoltaic power generation system 100.

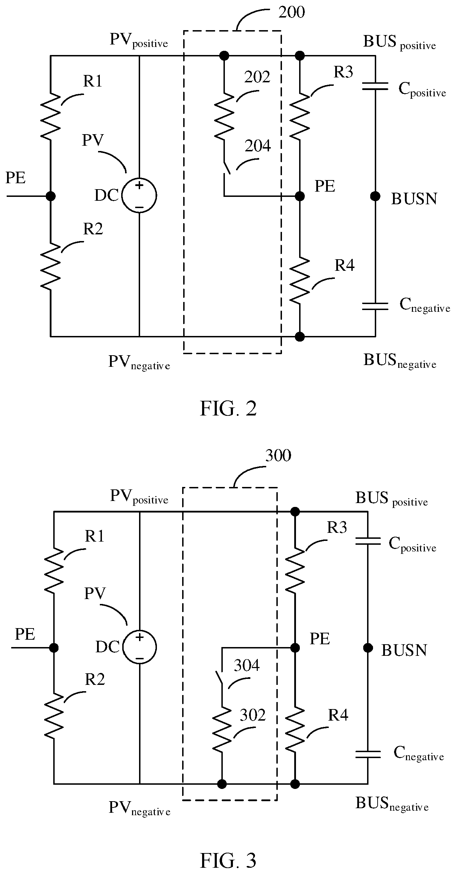

FIG. 2 is a schematic diagram of a circuit structure of a common mode current controller of an inverter in an implementation according to an embodiment of this application. As shown in FIG. 2, a positive electrode of a direct current voltage source PV is denoted as $PV_{positive}$, a negative electrode is denoted as $PV_{negative}$, and there is a positive terminal-to-ground impedance circuit R1 and a negative terminal-to-ground impedance circuit R2. One end of the positive terminal-to-ground impedance circuit R1 of the direct current voltage source PV is grounded (Protecting Earthing, PE), and the other end is connected to the positive electrode $PV_{positive}$ of the direct current voltage source PV One end of the negative terminal-to-ground impedance circuit R2 of the direct current voltage source PV is grounded (PE), and the other end is connected to the negative electrode $PV_{negative}$ of the direct current voltage source PV A circuit equivalent component of a direct current busbar capacitor includes a positive terminal part $C_{positive}$ of the direct current busbar capacitor, a negative terminal part $C_{negative}$ of the direct current busbar capacitor, a positive terminal part R3 of an intrinsic ground impedance part of the direct current busbar capacitor, and a negative terminal part R4 of the intrinsic ground impedance part of the direct current busbar capacitor. One end of the positive terminal part $C_{positive}$ of the direct current busbar capacitor is a positive terminal of the direct current busbar capacitor, the positive terminal of the direct current busbar capacitor is connected to the positive terminal part R3 of the intrinsic ground impedance part of the direct current busbar capacitor, the other end is a midpoint of the direct current busbar capacitor, and a midpoint-to-ground voltage of the direct current busbar capacitor is denoted as BUSN. One end of the negative terminal part $C_{negative}$ of the direct current busbar capacitor is a negative terminal of the direct current busbar capacitor, the negative terminal of the direct current busbar capacitor is connected to the negative terminal part R4 of the intrinsic ground impedance part of the direct current busbar capacitor, and the other end is the midpoint of the direct current busbar capacitor. One end of each of the positive terminal part R3 of the intrinsic ground impedance part of the direct current busbar capacitor and the negative terminal part R4 of the intrinsic ground impedance part of the direct current busbar capacitor is grounded. The positive electrode and the negative electrode of the direct current voltage source PV are respectively connected to the positive terminal part $C_{positive}$ of the direct current busbar capacitor and the negative terminal part $C_{negative}$ of the direct current busbar capacitor. Therefore, one end of each of the positive terminal-to-ground impedance circuit R1 of the direct current voltage source PV and the positive terminal part R3 of the intrinsic ground impedance part of the direct current busbar capacitor is grounded, and the other end is connected to the positive electrode of the direct current voltage source PV, to form a parallel connection relationship. One end of each of the negative terminal-to-ground impedance circuit R2 of the direct current voltage source PV and the negative terminal part R4 of the intrinsic ground impedance part of the direct current busbar capacitor is grounded, and the other end is connected to the negative electrode of the direct current voltage source PV, to form a parallel connection relationship.

Continue to refer to FIG. 2. A common mode current controller 200 includes an impedance correction circuit 202 and a switch 204. One end of the impedance correction circuit 202 is connected to the positive electrode $PV_{positive}$ of the direct current voltage source PV, the other end is connected to one end of the switch 204, and the other end of the switch 204 is grounded. Therefore, when the switch 204 is closed, one end of the impedance correction circuit 202 is grounded, and the other end is connected to the positive electrode $PV_{positive}$, of the direct current voltage source PV, so that the positive terminal-to-ground impedance circuit R1 of the direct current voltage source PV and the positive terminal part R3 of the intrinsic ground impedance part of the direct current busbar capacitor are connected in parallel between the positive terminal of the direct current busbar capacitor and a grounding (PE) node. It should be understood that, when the switch 204 is closed, positive terminal-to-ground equivalent impedance $RES_{positive}$ of the direct current busbar capacitor needs to be considered as equivalent impedance between the positive terminal of the direct current busbar capacitor and the ground. In other words, $RES_{positive}$ meets Formula (1):

$$\frac{1}{RES_{positive}} = \frac{1}{R_1} + \frac{1}{R_3} + \frac{1}{R_{202}} \tag{1}$$

Herein, $R_1$ represents a magnitude of the positive terminal-to-ground impedance circuit R1 of the direct current voltage source PV, $R_3$ represents a magnitude of the positive terminal part R3 of the intrinsic ground impedance part of the direct current busbar capacitor, and $R_{202}$ represents a magnitude of the impedance correction circuit 202. Therefore, the switch 204 is closed, to introduce the impedance correction circuit 202 and reduce a magnitude of the positive terminal-to-ground equivalent impedance $RES_{positive}$, of the direct current busbar capacitor, and the magnitude of the impedance correction circuit 202 is adjusted, to adjust the magnitude of the positive terminal-to-ground equivalent impedance $RES_{positive}$, of the direct current busbar capacitor. Further, the magnitude of the positive terminal-to-ground equivalent impedance $RES_{positive}$, of the direct current busbar capacitor is adjusted, to adjust impedance matching between the positive terminal-to-ground equivalent impedance $RES_{positive}$ of the direct current busbar capacitor and negative terminal-to-ground equivalent impedance of the direct current busbar capacitor, so that the positive terminal-to-ground equivalent impedance $RES_{positive}$ of the direct current busbar capacitor can match the negative terminal-to-ground equivalent impedance of the direct current busbar capacitor, to pre-control a magnitude of a common mode current generated when the inverter is grid-tied, in other words, pre-control a magnitude of a common mode impulse current (leakage current). Herein, the negative terminal-to-ground equivalent impedance of the direct current busbar capacitor needs to be understood as a magnitude of equivalent impedance of a parallel connection of the negative terminal-to-ground impedance circuit R2 of the direct current voltage source PV and the negative terminal part R4 of the intrinsic ground impedance part of the direct current busbar capacitor.

When the switch 204 is opened, the positive terminal-to-ground equivalent impedance $RES_{positive}$, of the direct current busbar capacitor is equivalent to a magnitude of equivalent impedance of a parallel connection of the positive terminal-to-ground impedance circuit R1 of the direct current voltage source PV and the positive terminal part R3 of the intrinsic ground impedance part of the direct current busbar capacitor. Affected by a change in an environmental factor such as a temperature and component aging, the positive terminal-to-ground equivalent impedance $RES_{positive}$, of the direct current busbar capacitor or the negative terminal-to-ground equivalent impedance of the direct current busbar capacitor changes, resulting in impedance mismatching. Consequently, a positive terminal voltage $BUS_{positive}$ of the direct current busbar capacitor or a negative terminal voltage $BUS_{negative}$ of the direct current busbar capacitor fluctuate greatly, and a BUSN potential is not zero. In this case, if a grid-tied switch of the inverter is closed, large impact of the common mode current is generated. Specifically, in the circuit structure of the common mode current controller of the inverter shown in FIG. 2, when it is detected that the midpoint-to-ground voltage BUSN of the direct current busbar capacitor is greater than a specific threshold (which may be identified as a first threshold), it indicates that the BUSN potential floats upward and goes beyond a normal range and a large common mode impulse current at a grid-tied instant may be generated. In this case, the switch 214 is closed, to reduce the magnitude of the positive terminal-to-ground equivalent impedance $RES_{positive}$, of the direct current busbar capacitor, so as to effectively reduce an upward floating degree of the BUSN potential, and help restore impedance matching and control a magnitude of the common mode impulse current.

In the circuit structure of the common mode current controller of the inverter shown in FIG. 2, the common mode current controller 200 includes the switch 204 and the impedance correction circuit 202. One end of the impedance correction circuit 202 is grounded, the other end of the impedance correction circuit 202 is connected to one end of the switch 204, and the other end of the switch 204 is connected to the positive terminal of the direct current busbar capacitor, so that the common mode current controller 200 and the positive terminal part of the intrinsic ground impedance part of the direct current busbar capacitor are connected in parallel between the positive terminal of the direct current busbar capacitor and the ground. The common mode current controller 200 is configured to: when the midpoint-to-ground voltage BUSN of the direct current busbar capacitor is greater than the first threshold, close the switch 204 to adjust impedance matching between the positive terminal-to-ground equivalent impedance of the direct current busbar capacitor and the negative terminal-to-ground equivalent impedance of the direct current busbar capacitor, so that the inverter can pre-control the magnitude of the common mode current generated when the inverter is grid-tied.

Therefore, in the circuit structure of the common mode current controller of the inverter shown in FIG. 2, introduction of the impedance correction circuit 202 and adjustment of impedance matching are implemented based on the midpoint-to-ground voltage BUSN of the direct current busbar capacitor, so that the magnitude of the common mode current generated when the inverter is grid-tied can be pre-controlled before the grid-tied switch of the inverter is closed, to help reduce a degree of complexity of a system design and reduce costs of the system design.

In some example embodiments, the threshold or the first threshold may be preset, or may be set based on a corresponding inverter type and a parameter, or may be adjusted based on a corresponding state of a power grid and a use scenario. These may be adjusted and improved based on a specific application environment, and are not specifically limited herein.

In some example embodiments, the magnitude of the impedance correction circuit 202 may be preset, or may be set based on a corresponding inverter type and a parameter, or may be adjusted based on a corresponding state of a power grid and a use scenario. These may be adjusted and improved based on a specific application environment, and are not specifically limited herein.

In some example embodiments, a proper technical means may be used for a closing/opening mechanism of the switch 204 and a specific structure of the switch 204. For example, conduction or breaking of a circuit may be controlled by using a controllable electronic component, including but not limited to a thyristor, a transistor, a field effect transistor, a silicon controlled thyristor, and a relay. These may be adjusted and improved based on a specific application environment, and are not specifically limited herein.

In some example embodiments, the midpoint-to-ground voltage BUSN of the direct current busbar capacitor may be obtained through direct measurement, for example, may be obtained by using a voltage sensor; or may be obtained through indirect measurement, for example, may be determined based on the positive terminal voltage $BUS_{positive}$ and a negative terminal voltage $BUS_{negative}$ of the direct current busbar capacitor of the inverter. For example, the positive terminal-to-ground voltage $BUS_{positive}$ and the negative terminal-to-ground voltage $BUS_{negative}$ of the direct current busbar capacitor 106 are measured, and then a sum of $BUS_{positive}$ and $BUS_{negative}$ is divided by two.

In some example embodiments, an impedance value of the impedance correction circuit 202 is adjustable, and the impedance value $R_{202}$ of the impedance correction circuit 202 is adjusted, so that a positive busbar and a negative busbar of the inverter have symmetric impedance to ground.

In some example embodiments, the common mode current controller 200 is a part of a grid-tied inverter, and the grid-tied inverter includes a direct current-direct current DC-DC converter and a direct current-alternating current DC-AC converter. The common mode current controller 210 is between the DC-DC converter and the DC-AC converter.

In some example embodiments, the common mode current controller 200 is further configured to control to release a residual charge of a Y capacitor at a terminal of the inverter. In a possible implementation, the Y capacitor at the terminal is a capacitor on an AC side of the inverter.

In some example embodiments, in a photovoltaic power generation system including a plurality of parallel grid-tied inverters, each grid-tied inverter and the common mode current controller 200 include a same device and similar structures, to have an improved capability of resisting impact of a common mode current generated at a grid-tied instant of the photovoltaic power generation system.

In some example embodiments, the common mode current controller 200 is part of the photovoltaic power generation system, the photovoltaic power generation system includes the grid-tied inverter, the grid-tied inverter includes the common mode current controller 200, and the first threshold is set based on a state of a power grid to which the grid-tied inverter is tied.

FIG. 3 is a schematic diagram of a circuit structure of a common mode current controller of an inverter in another implementation according to an embodiment of this application. As shown in FIG. 3, a positive electrode of a direct current voltage source PV is denoted as $PV_{positive}$, a negative electrode is denoted as $PV_{negative}$, and there is a positive terminal-to-ground impedance circuit R1 and a negative terminal-to-ground impedance circuit R2. One end of the positive terminal-to-ground impedance circuit R1 of the direct current voltage source PV is grounded (PE), and the other end is connected to the positive electrode $PV_{positive}$ of the direct current voltage source PV One end of the negative terminal-to-ground impedance circuit R2 of the direct current voltage source PV is grounded (PE), and the other end is connected to the negative electrode $PV_{negative}$ of the direct current voltage source PV A circuit equivalent component of a direct current busbar capacitor includes a positive terminal part $C_{positive}$ of the direct current busbar capacitor, a negative terminal part $C_{negative}$ of the direct current busbar capacitor, a positive terminal part R3 of an intrinsic ground impedance part of the direct current busbar capacitor, and a negative terminal part R4 of the intrinsic ground impedance part of the direct current busbar capacitor. One end of the positive terminal part $C_{positive}$ of the direct current busbar capacitor is a positive terminal of the direct current busbar capacitor, the positive terminal of the direct current busbar capacitor is connected to the positive terminal part R3 of the intrinsic ground impedance part of the direct current busbar capacitor, the other end is a midpoint of the direct current busbar capacitor, and a midpoint-to-ground voltage of the direct current busbar capacitor is denoted as BUSN. One end of the negative terminal part $C_{negative}$ of the direct current busbar capacitor is a negative terminal of the direct current busbar capacitor, the negative terminal of the direct current busbar capacitor is connected to the negative terminal part R4 of the intrinsic ground impedance part of the direct current busbar capacitor, and the other end is the midpoint of the direct current busbar capacitor. One end of each of the positive terminal part R3 of the intrinsic ground impedance part of the direct current busbar capacitor and the negative terminal part R4 of the intrinsic ground impedance part of the direct current busbar capacitor is grounded. The positive electrode and the negative electrode of the direct current voltage source PV are respectively connected to the positive terminal part $C_{positive}$ of the direct current busbar capacitor and the negative terminal part $C_{negative}$ of the direct current busbar capacitor. Therefore, one end of each of the positive terminal-to-ground impedance circuit R1 of the direct current voltage source PV and the positive terminal part R3 of the intrinsic ground impedance part of the direct current busbar capacitor is grounded, and the other end is connected to the positive electrode of the direct current voltage source PV, to form a parallel connection relationship. One end of each of the negative terminal-to-ground impedance circuit R2 of the direct current voltage source PV and the negative terminal part R4 of the intrinsic ground impedance part of the direct current busbar capacitor is grounded, and the other end is connected to the negative electrode of the direct current voltage source PV, to form a parallel connection relationship.

Continue to refer to FIG. 3. A common mode current controller 300 includes an impedance correction circuit 302 and a switch 304. One end of the impedance correction circuit 302 is connected to the negative electrode $PV_{negative}$ of the direct current voltage source PV, the other end is connected to one end of the switch 304, and the other end of the switch 304 is grounded. Therefore, when the switch 304 is closed, one end of the impedance correction circuit 302 is grounded, and the other end is connected to the negative electrode $PV_{negative}$ of the direct current voltage source PV, so that the negative terminal-to-ground impedance circuit R2 of the direct current voltage source PV and the negative terminal part R4 of the intrinsic ground impedance part of the direct current busbar capacitor are connected in parallel between the negative terminal of the direct current busbar capacitor and a grounding (PE) node. It should be understood that, when the switch 304 is closed, negative terminal-to-ground equivalent impedance $RES_{negative}$ of the direct current busbar capacitor needs to be considered as equivalent impedance between the negative terminal of the direct current busbar capacitor and the ground. In other words, $RES_{negative}$ meets Formula (2):

$$\frac{1}{RES_{negative}} = \frac{1}{R_2} + \frac{1}{R_4} + \frac{1}{R_{302}} \tag{2}$$

Herein, $R_2$ represents a magnitude of the negative terminal-to-ground impedance circuit R2 of the direct current voltage source PV, $R_4$ represents a magnitude of the negative terminal part R4 of the intrinsic ground impedance part of the direct current busbar capacitor, and $R_{302}$ represents a magnitude of the impedance correction circuit 302. Therefore, the switch 304 is closed, to introduce the impedance correction circuit 302 and reduce a magnitude of the negative terminal-to-ground equivalent impedance $RES_{negative}$ of the direct current busbar capacitor, and the magnitude of the impedance correction circuit 302 is adjusted, to adjust the magnitude of the negative terminal-to-ground equivalent impedance $RES_{negative}$ of the direct current busbar capacitor. Further, the magnitude of the negative terminal-to-ground equivalent impedance $RES_{negative}$ of the direct current busbar capacitor is adjusted, to adjust impedance matching between positive terminal-to-ground equivalent impedance of the direct current busbar capacitor and the negative terminal-to-ground equivalent impedance $RES_{negative}$ of the direct current busbar capacitor, so that the positive terminal-to-ground equivalent impedance of the direct current busbar capacitor can match the negative terminal-to-ground equivalent impedance $RES_{negative}$ of the direct current busbar capacitor, to pre-control a magnitude of a common mode current generated when the inverter is grid-tied, in other words, pre-control a magnitude of a common mode impulse current (leakage current). Herein, the positive terminal-to-ground equivalent impedance of the direct current busbar capacitor needs to be understood as a magnitude of equivalent impedance of a parallel connection of the positive terminal-to-ground impedance circuit R1 of the direct current voltage source PV and the positive terminal part R3 of the intrinsic ground impedance part of the direct current busbar capacitor.

When the switch 304 is opened, the negative terminal-to-ground equivalent impedance $RES_{negative}$ of the direct current busbar capacitor is equivalent to a magnitude of equivalent impedance of a parallel connection of the negative terminal-to-ground impedance circuit R2 of the direct current voltage source PV and the negative terminal part R4 of the intrinsic ground impedance part of the direct current busbar capacitor. Affected by a change in an environmental factor such as a temperature and component aging, the positive terminal-to-ground equivalent impedance of the direct current busbar capacitor or the negative terminal-to-ground equivalent impedance $RES_{negative}$ of the direct current busbar capacitor changes, resulting in impedance mismatching. Consequently, a positive terminal voltage $BUS_{positive}$ of the direct current busbar capacitor or a negative terminal voltage $BUS_{negative}$ of the direct current busbar capacitor fluctuate greatly, and a BUSN potential is not zero. In this case, if a grid-tied switch of the inverter is closed, large impact of the common mode current is generated. Specifically, in the circuit structure of the common mode current controller of the inverter shown in FIG. 3, when it is detected that the midpoint-to-ground voltage BUSN of the direct current busbar capacitor is less than a specific threshold (which may be identified as a first threshold), it indicates that the BUSN potential floats downward and goes beyond a normal range and a large common mode impulse current at a grid-tied instant may be generated. In this case, the switch 304 is closed, to reduce the magnitude of the negative terminal-to-ground equivalent impedance $RES_{negative}$ of the direct current busbar capacitor, so as to effectively reduce a downward floating degree of the BUSN potential, and help restore impedance matching and control a magnitude of the common mode impulse current.

In the circuit structure of the common mode current controller of the inverter shown in FIG. 3, the common mode current controller 300 includes the switch 304 and the impedance correction circuit 302. One end of the impedance correction circuit 302 is grounded, the other end of the impedance correction circuit 302 is connected to one end of the switch 304, and the other end of the switch 304 is connected to the negative terminal of the direct current busbar capacitor, so that the common mode current controller 300 and the negative terminal part of the intrinsic ground impedance part of the direct current busbar capacitor are connected in parallel between the negative terminal of the direct current busbar capacitor and the ground. The common mode current controller 300 is configured to: when the midpoint-to-ground voltage of the direct current busbar capacitor is less than the first threshold, close the switch 304 to adjust impedance matching between the positive terminal-to-ground equivalent impedance of the direct current busbar capacitor and the negative terminal-to-ground equivalent impedance of the direct current busbar capacitor, so that the inverter can pre-control the magnitude of the common mode current generated when the inverter is grid-tied.

Therefore, in the circuit structure of the common mode current controller of the inverter shown in FIG. 3, introduction of the impedance correction circuit 302 and adjustment of impedance matching are implemented based on the midpoint-to-ground voltage BUSN of the direct current busbar capacitor, so that the magnitude of the common mode current generated when the inverter is grid-tied can be pre-controlled before the grid-tied switch of the inverter is closed, to help reduce a degree of complexity of a system design and reduce costs of the system design.

In some example embodiments, the threshold or the first threshold may be preset, or may be set based on a corresponding inverter type and a parameter, or may be adjusted based on a corresponding state of a power grid and a use scenario. These may be adjusted and improved based on a specific application environment, and are not specifically limited herein.

In some example embodiments, the magnitude of the impedance correction circuit 302 may be preset, or may be set based on a corresponding inverter type and a parameter, or may be adjusted based on a corresponding state of a power grid and a use scenario. These may be adjusted and improved based on a specific application environment, and are not specifically limited herein.

In some example embodiments, a proper technical means may be used for a closing/opening mechanism of the switch 304 and a specific structure of the switch 304. For example, conduction or breaking of a circuit may be controlled by using a controllable electronic component, including but not limited to a thyristor, a transistor, a field effect transistor, a silicon controlled thyristor, and a relay. These may be adjusted and improved based on a specific application environment, and are not specifically limited herein.

In some example embodiments, the midpoint-to-ground voltage BUSN of the direct current busbar capacitor may be obtained through direct measurement, for example, may be obtained by using a voltage sensor; or may be obtained through indirect measurement, for example, may be determined based on the positive terminal voltage $BUS_{positive}$ and a negative terminal voltage $BUS_{negative}$ of the direct current busbar capacitor of the inverter. For example, the positive terminal-to-ground voltage $BUS_{positive}$ and the negative terminal-to-ground voltage $BUS_{negative}$ of the direct current busbar capacitor 106 are measured, and then a sum of $BUS_{positive}$ and $BUS_{negative}$ is divided by two.

In some example embodiments, an impedance value of the impedance correction circuit 302 is adjustable, and the impedance value $R_{212}$ of the impedance correction circuit 302 is adjusted, so that a positive busbar and a negative busbar of the inverter have symmetric impedance to ground.

In some example embodiments, the common mode current controller 300 is a part of the grid-tied inverter, and the grid-tied inverter includes a direct current-direct current DC-DC converter and a direct current-alternating current DC-AC converter. The common mode current controller 300 is between the DC-DC converter and the DC-AC converter.

In some example embodiments, the common mode current controller 300 is further configured to control to release a residual charge of a Y capacitor at a terminal of the inverter. In a possible implementation, the Y capacitor at the terminal is a capacitor on an AC side of the inverter.

In some example embodiments, in a photovoltaic power generation system including a plurality of parallel grid-tied inverters, each grid-tied inverter and the common mode current controller 300 include a same device and similar structures, to have an improved capability of resisting impact of a common mode current generated at a grid-tied instant of the photovoltaic power generation system.

In some example embodiments, the common mode current controller 300 is part of the photovoltaic power generation system, the photovoltaic power generation system includes the grid-tied inverter, the grid-tied inverter includes the common mode current controller 300, and the first threshold is set based on a state of a power grid to which the grid-tied inverter is tied.

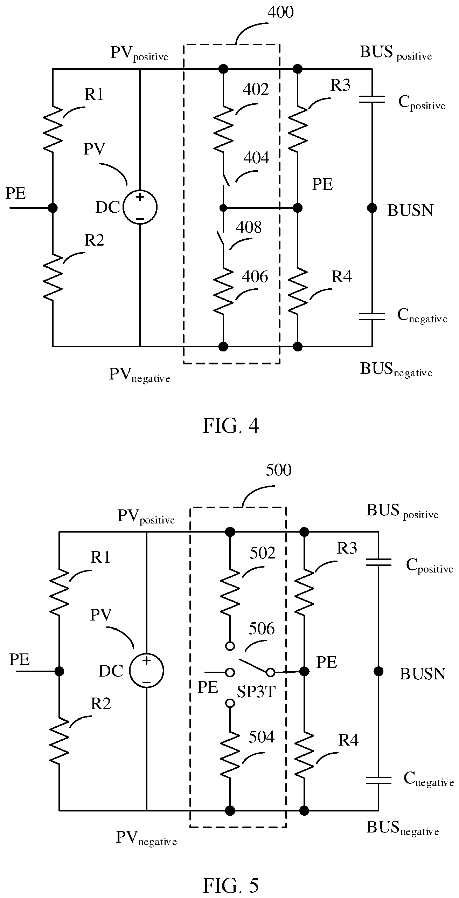

FIG. 4 is a schematic diagram of a circuit structure of a common mode current controller of an inverter in another implementation according to an embodiment of this application. As shown in FIG. 4, a positive electrode of a direct current voltage source PV is denoted as $PV_{positive}$, a negative electrode is denoted as $PV_{negative}$, and there is a positive terminal-to-ground impedance circuit R1 and a negative terminal-to-ground impedance circuit R2. One end of the positive terminal-to-ground impedance circuit R1 of the direct current voltage source PV is grounded (PE), and the other end is connected to the positive electrode $PV_{positive}$ of the direct current voltage source PV One end of the negative terminal-to-ground impedance circuit R2 of the direct current voltage source PV is grounded (PE), and the other end is connected to the negative electrode $PV_{negative}$ of the direct current voltage source PV A circuit equivalent component of a direct current busbar capacitor includes a positive terminal part $C_{positive}$ of the direct current busbar capacitor, a negative terminal part $C_{negative}$ of the direct current busbar capacitor, a positive terminal part R3 of an intrinsic ground impedance part of the direct current busbar capacitor, and a negative terminal part R4 of the intrinsic ground impedance part of the direct current busbar capacitor. One end of the positive terminal part $C_{positive}$ of the direct current busbar capacitor is a positive terminal of the direct current busbar capacitor, the positive terminal of the direct current busbar capacitor is connected to the positive terminal part R3 of the intrinsic ground impedance part of the direct current busbar capacitor, the other end is a midpoint of the direct current busbar capacitor, and a midpoint-to-ground voltage of the direct current busbar capacitor is denoted as BUSN. One end of the negative terminal part $C_{negative}$ of the direct current busbar capacitor is a negative terminal of the direct current busbar capacitor, the negative terminal of the direct current busbar capacitor is connected to the negative terminal part R4 of the intrinsic ground impedance part of the direct current busbar capacitor, and the other end is the midpoint of the direct current busbar capacitor. One end of each of the positive terminal part R3 of the intrinsic ground impedance part of the direct current busbar capacitor and the negative terminal part R4 of the intrinsic ground impedance part of the direct current busbar capacitor is grounded. The positive electrode and the negative electrode of the direct current voltage source PV are respectively connected to the positive terminal part $C_{positive}$ of the direct current busbar capacitor and the negative terminal part $C_{negative}$ of the direct current busbar capacitor. Therefore, one end of each of the positive terminal-to-ground impedance circuit R1 of the direct current voltage source PV and the positive terminal part R3 of the intrinsic ground impedance part of the direct current busbar capacitor is grounded, and the other end is connected to the positive electrode of the direct current voltage source PV, to form a parallel connection relationship. One end of each of the negative terminal-to-ground impedance circuit R2 of the direct current voltage source PV and the negative terminal part R4 of the intrinsic ground impedance part of the direct current busbar capacitor is grounded, and the other end is connected to the negative electrode of the direct current voltage source PV, to form a parallel connection relationship.

Continue to refer to FIG. 4. A common mode current controller 400 includes a first impedance correction circuit 402, a first switch 404, a second impedance correction circuit 406, and a second switch 408. One end of the first impedance correction circuit 402 is connected to the positive electrode $PV_{positive}$, of the direct current voltage source PV, the other end is connected to one end of the first switch 404, and the other end of the first switch 404 is grounded. Therefore, when the first switch 404 is closed, one end of the first impedance correction circuit 402 is grounded, and the other end is connected to the positive electrode $PV_{positive}$ of the direct current voltage source PV, so that the positive terminal-to-ground impedance circuit R1 of the direct current voltage source PV and the positive terminal part R3 of the intrinsic ground impedance part of the direct current busbar capacitor are connected in parallel between the positive terminal of the direct current busbar capacitor and a grounding (PE) node. It should be understood that, when the first switch 404 is closed, positive terminal-to-ground equivalent impedance $RES_{positive}$ of the direct current busbar capacitor needs to be considered as equivalent impedance between the positive terminal of the direct current busbar capacitor and the ground. In other words, $RES_{positive}$ meets Formula (3):

$$\frac{1}{RES_{positive}} = \frac{1}{R_1} + \frac{1}{R_3} + \frac{1}{R_{402}} \qquad (3)$$

Herein, $R_1$ represents a magnitude of the positive terminal-to-ground impedance circuit R1 of the direct current voltage source PV, $R_3$ represents a magnitude of the positive terminal part R3 of the intrinsic ground impedance part of the direct current busbar capacitor, and $R_{402}$ represents a magnitude of the first impedance correction circuit 402. Therefore, the first switch 404 is closed, to introduce the first impedance correction circuit 402 and reduce a magnitude of the positive terminal-to-ground equivalent impedance $RES_{positive}$ of the direct current busbar capacitor, and the magnitude of the first impedance correction circuit 402 is adjusted, to adjust the magnitude of the positive terminal-to-ground equivalent impedance $RES_{positive}$, of the direct current busbar capacitor. Further, the magnitude of the positive terminal-to-ground equivalent impedance $RES_{positive}$, of the direct current busbar capacitor is adjusted, to adjust impedance matching between the positive terminal-to-ground equivalent impedance $RES_{positive}$, of the direct current busbar capacitor and negative terminal-to-ground equivalent impedance of the direct current busbar capacitor, so that the positive terminal-to-ground equivalent impedance $RES_{positive}$, of the direct current busbar capacitor can match the negative terminal-to-ground equivalent impedance of the direct current busbar capacitor, to pre-control a magnitude of a common mode current generated when the inverter is grid-tied, in other words, pre-control a magnitude of a common mode impulse current (leakage current). Herein, the negative terminal-to-ground equivalent impedance of the direct current busbar capacitor needs to be understood as a magnitude of equivalent impedance of a parallel connection of the negative terminal-to-ground impedance circuit R2 of the direct current voltage source PV and the negative terminal part R4 of the intrinsic ground impedance part of the direct current busbar capacitor.

When the first switch 404 is opened, the positive terminal-to-ground equivalent impedance $RES_{positive}$, of the direct current busbar capacitor is equivalent to a magnitude of equivalent impedance of a parallel connection of the positive terminal-to-ground impedance circuit R1 of the direct current voltage source PV and the positive terminal part R3 of the intrinsic ground impedance part of the direct current busbar capacitor. Affected by a change in an environmental factor such as a temperature and component aging, the positive terminal-to-ground equivalent impedance $RES_{positive}$, of the direct current busbar capacitor or the negative terminal-to-ground equivalent impedance of the direct current busbar capacitor changes, resulting in impedance mismatching. Consequently, a positive terminal voltage $BUS_{positive}$ of the direct current busbar capacitor or a negative terminal voltage $BUS_{negative}$ of the direct current busbar capacitor fluctuate greatly, and a BUSN potential is not zero. In this case, if a grid-tied switch of the inverter is closed, large impact of the common mode current is generated. Specifically, in the circuit structure of the common mode current controller of the inverter shown in FIG. 4, when it is detected that the midpoint-to-ground voltage BUSN of the direct current busbar capacitor is greater than a specific threshold (which may be identified as a first threshold), it indicates that the BUSN potential floats upward and goes beyond a normal range and a large common mode impulse current at a grid-tied instant may be generated. In this case, the switch 404 is closed, to reduce the magnitude of the positive terminal-to-ground equivalent impedance $RES_{positive}$, of the direct current busbar capacitor, so as to effectively reduce an upward floating degree of the BUSN potential, and help restore impedance matching and control a magnitude of the common mode impulse current.

Continue to refer to FIG. 4. One end of the second impedance correction circuit 406 is connected to the negative electrode $PV_{negative}$ of the direct current voltage source PV, the other end is connected to one end of the second switch 408, and the other end of the second switch 408 is grounded. Therefore, when the second switch 408 is closed, one end of the second impedance correction circuit 406 is grounded, and the other end is connected to the negative electrode $PV_{negative}$ of the direct current voltage source PV, so that that the negative terminal-to-ground impedance circuit R2 of the direct current voltage source PV and the negative terminal part R4 of the intrinsic ground impedance part of the direct current busbar capacitor are connected in parallel between the negative terminal of the direct current busbar capacitor and a grounding (PE) node. It should be understood that, when the second switch 408 is closed, negative terminal-to-ground equivalent impedance $RES_{negative}$ of the direct current busbar capacitor needs to be considered as equivalent impedance between the negative terminal of the direct current busbar capacitor and the ground. In other words, $RES_{negative}$ meets Formula (4):

$$\frac{1}{RES_{negative}} = \frac{1}{R_2} + \frac{1}{R_4} + \frac{1}{R_{406}} \qquad (4)$$

Herein, $R_2$ represents a magnitude of the negative terminal-to-ground impedance circuit R2 of the direct current voltage source PV, $R_4$ represents a magnitude of the negative terminal part R4 of the intrinsic ground impedance part of the direct current busbar capacitor, and $R_{406}$ represents a magnitude of the second impedance correction circuit 406. Therefore, the second switch 408 is closed, to introduce the second impedance correction circuit 406 and reduce a magnitude of the negative terminal-to-ground equivalent impedance $RES_{negative}$ of the direct current busbar capacitor, and the magnitude of the second impedance correction circuit 406 is adjusted, to adjust the magnitude of the negative terminal-to-ground equivalent impedance $RES_{negative}$ of the direct current busbar capacitor. Further, the magnitude of the negative terminal-to-ground equivalent impedance $RES_{negative}$ of the direct current busbar capacitor is adjusted, to adjust impedance matching between the positive terminal-to-ground equivalent impedance of the direct current busbar capacitor and the negative terminal-to-ground equivalent impedance $RES_{negative}$ of the direct current busbar capacitor, so that the positive terminal-to-ground equivalent impedance of the direct current busbar capacitor can match the negative terminal-to-ground equivalent impedance $RES_{negative}$ of the direct current busbar capacitor, to pre-control a magnitude of a common mode current generated when the inverter is grid-tied, in other words, pre-control a magnitude of a common mode impulse current (leakage current). Herein, the positive terminal-to-ground equivalent impedance of the direct current busbar capacitor needs to be understood as a magnitude of equivalent impedance of a parallel connection of the positive terminal-to-ground impedance circuit R1 of the direct current voltage source PV and the positive terminal part R3 of the intrinsic ground impedance part of the direct current busbar capacitor.

When the second switch 408 is opened, the negative terminal-to-ground equivalent impedance $RES_{negative}$ of the direct current busbar capacitor is equivalent to a magnitude of equivalent impedance of a parallel connection of the negative terminal-to-ground impedance circuit R2 of the direct current voltage source PV and the negative terminal part R4 of the intrinsic ground impedance part of the direct current busbar capacitor. Affected by a change in the environmental factor such as the temperature and component aging, the positive terminal-to-ground equivalent impedance of the direct current busbar capacitor or the negative terminal-to-ground equivalent impedance $RES_{negative}$ of the direct current busbar capacitor changes, resulting in impedance mismatching. Consequently, the positive terminal voltage $BUS_{positive}$ of the direct current busbar capacitor or the negative terminal voltage $BUS_{negative}$ of the direct current busbar capacitor fluctuate greatly, and the BUSN potential is not zero. In this case, if the grid-tied switch of the inverter is closed, large impact of the common mode current is generated. Specifically, in the circuit structure of the common mode current controller of the inverter shown in FIG. 4, when it is detected that the midpoint-to-ground voltage BUSN of the direct current busbar capacitor is less than a specific threshold (which may be identified as a second threshold), it indicates that the BUSN potential floats downward and goes beyond the normal range and a large common mode impulse current at the grid-tied instant may be generated. In this case, the second switch 408 is closed, to reduce the magnitude of the negative terminal-to-ground equivalent impedance $RES_{negative}$ of the direct current busbar capacitor, so as to effectively reduce the downward floating degree of the BUSN potential, and help restore impedance matching and control the magnitude of the common mode impulse current.

In the circuit structure of the common mode current controller of the inverter shown in FIG. 4, the common mode current controller 400 includes: the first switch 404, where one end of the first switch 404 is connected to the positive terminal of the direct current busbar capacitor; the second switch 408, where one end of the second switch 408 is connected to the negative terminal of the direct current busbar capacitor; the first impedance correction circuit 402, where one end of the first impedance correction circuit 402 is grounded, and the other end of the first impedance correction circuit 402 is connected to the other end of the first switch 404; and the second impedance correction circuit 406, where one end of the second impedance correction circuit 406 is grounded, and the other end of the second impedance correction circuit 406 is connected to the other end of the second switch 408. The common mode current controller 400 is configured to: when the midpoint-to-ground voltage BUSN of the direct current busbar capacitor is greater than the first threshold, close the first switch 404, and open the second switch 408, so that the first impedance correction circuit 402 and the positive terminal part of the intrinsic ground impedance part of the direct current busbar capacitor are connected in parallel between the positive terminal of the direct current busbar capacitor and the ground, to reduce the magnitude of the positive terminal-to-ground equivalent impedance of the direct current busbar capacitor. The common mode current controller 400 is configured to: when the midpoint-to-ground voltage BUSN of the direct current busbar capacitor is less than the second threshold, close the second switch 408, and open the first switch 404, so that the second impedance correction circuit 406 and the negative terminal part of the intrinsic ground impedance part of the direct current busbar capacitor are connected in parallel between the negative terminal of the direct current busbar capacitor and the ground, to reduce the magnitude of the negative terminal-to-ground equivalent impedance of the direct current busbar capacitor. The common mode current controller 400 adjusts impedance matching between the positive terminal-to-ground equivalent impedance of the direct current busbar capacitor and the negative terminal-to-ground equivalent impedance of the direct current busbar capacitor, so that the inverter can pre-control the magnitude of the common mode current generated when the inverter is grid-tied.

Therefore, in the circuit structure of the common mode current controller of the inverter shown in FIG. 4, introduction of the first impedance correction circuit 402 or the second impedance correction circuit 406 and adjustment of impedance matching are implemented based on the midpoint-to-ground voltage BUSN of the direct current busbar capacitor, so that the magnitude of the common mode current generated when the inverter is grid-tied can be pre-controlled before the grid-tied switch of the inverter is closed, to help reduce a degree of complexity of a system design and reduce costs of the system design.

In some example embodiments, the first threshold or the second threshold may be preset, or may be set based on a corresponding inverter type and a parameter, or may be adjusted based on a corresponding state of a power grid and a use scenario. These may be adjusted and improved based on a specific application environment, and are not specifically limited herein.

In some example embodiments, the size of the first impedance correction circuit 402 or the second impedance correction circuit 406 may be preset, or may be set based on a corresponding inverter type and a parameter, or may be adjusted based on a corresponding state of a power grid and a use scenario. These may be adjusted and improved based on a specific application environment, and are not specifically limited herein.

In some example embodiments, a proper technical means may be used for a closing/opening mechanism of the first switch 404 or the second switch 408 and a specific structure of the first switch 404 or the second switch 408. For example, conduction or breaking of a circuit may be controlled by using a controllable electronic component, including but not limited to a thyristor, a transistor, a field effect transistor, a silicon controlled thyristor, and a relay. These may be adjusted and improved based on a specific application environment, and are not specifically limited herein.

In some example embodiments, the midpoint-to-ground voltage BUSN of the direct current busbar capacitor may be obtained through direct measurement, for example, may be obtained by using a voltage sensor; or may be obtained through indirect measurement, for example, may be determined based on the positive terminal voltage $BUS_{positive}$ and a negative terminal voltage $BUS_{negative}$ of the direct current busbar capacitor of the inverter. For example, the positive terminal-to-ground voltage $BUS_{positive}$ and the negative terminal-to-ground voltage $BUS_{negative}$ of the direct current busbar capacitor 106 are measured, and then a sum of $BUS_{positive}$ and $BUS_{negative}$ is divided by two.

In some example embodiments, an impedance value of the first impedance correction circuit 402 and an impedance value of the second impedance correction circuit 406 are both adjustable, and the impedance value of the first impedance correction circuit 402 and the impedance value of the second impedance correction circuit 406 are adjusted, so that a positive busbar and a negative busbar of the inverter have symmetric impedance to ground.

In some example embodiments, the common mode current controller 400 is a part of the grid-tied inverter, and the grid-tied inverter includes a direct current-direct current DC-DC converter and a direct current-alternating current DC-AC converter. The common mode current controller 400 is between the DC-DC converter and the DC-AC converter.

In some example embodiments, the common mode current controller 400 is further configured to control to release a residual charge of a Y capacitor at a terminal of the inverter. In a possible implementation, the Y capacitor at the terminal is a capacitor on an AC side of the inverter.

In some example embodiments, in a photovoltaic power generation system including a plurality of parallel grid-tied inverters, each grid-tied inverter and the common mode current controller 400 include a same device and similar structures, to have an improved capability of resisting impact of a common mode current generated at a grid-tied instant of the photovoltaic power generation system.

In some example embodiments, the common mode current controller 400 is part of the photovoltaic power generation system, the photovoltaic power generation system includes the grid-tied inverter, the grid-tied inverter includes the common mode current controller 400, and the first threshold and the second threshold are set based on a state of a power grid to which the grid-tied inverter is tied.

FIG. 5 is a schematic diagram of a circuit structure of a common mode current controller of an inverter in another implementation according to an embodiment of this application. As shown in FIG. 5, a positive electrode of a direct current voltage source PV is denoted as $PV_{positive}$, a negative electrode is denoted as $PV_{negative}$, and there is a positive terminal-to-ground impedance circuit R1 and a negative terminal-to-ground impedance circuit R2. One end of the positive terminal-to-ground impedance circuit R1 of the direct current voltage source PV is grounded (PE), and the other end is connected to the positive electrode $PV_{positive}$ of the direct current voltage source PV One end of the negative terminal-to-ground impedance circuit R2 of the direct current voltage source PV is grounded (PE), and the other end is connected to the negative electrode $PV_{negative}$ of the direct current voltage source PV A circuit equivalent component of a direct current busbar capacitor includes a positive terminal part $C_{positive}$ of the direct current busbar capacitor, a negative terminal part $C_{negative}$ of the direct current busbar capacitor, a positive terminal part R3 of an intrinsic ground impedance part of the direct current busbar capacitor, and a negative terminal part R4 of the intrinsic ground impedance part of the direct current busbar capacitor. One end of the positive terminal part $C_{positive}$ of the direct current busbar capacitor is a positive terminal of the direct current busbar capacitor, the positive terminal of the direct current busbar capacitor is connected to the positive terminal part R3 of the intrinsic ground impedance part of the direct current busbar capacitor, the other end is a midpoint of the direct current busbar capacitor, and a midpoint-to-ground voltage of the direct current busbar capacitor is denoted as BUSN. One end of the negative terminal part $C_{negative}$ of the direct current busbar capacitor is a negative terminal of the direct current busbar capacitor, the negative terminal of the direct current busbar capacitor is connected to the negative terminal part R4 of the intrinsic ground impedance part of the direct current busbar capacitor, and the other end is the midpoint of the direct current busbar capacitor. One end of each of the positive terminal part R3 of the intrinsic ground impedance part of the direct current busbar capacitor and the negative terminal part R4 of the intrinsic ground impedance part of the direct current busbar capacitor is grounded. The positive electrode and the negative electrode of the direct current voltage source PV are respectively connected to the positive terminal part $C_{positive}$ of the direct current busbar capacitor and the negative terminal part $C_{negative}$ of the direct current busbar capacitor. Therefore, one end of each of the positive terminal-to-ground impedance circuit R1 of the direct current voltage source PV and the positive terminal part R3 of the intrinsic ground impedance part of the direct current busbar capacitor is grounded, and the other end is connected to the positive electrode of the direct current voltage source PV, to form a parallel connection relationship. One end of each of the negative terminal-to-ground impedance circuit R2 of the direct current voltage source PV and the negative terminal part R4 of the intrinsic ground impedance part of the direct current busbar capacitor is grounded, and the other end is connected to the negative electrode of the direct current voltage source PV, to form a parallel connection relationship.

Continue to refer to FIG. 5. A common mode current controller 500 includes a first impedance correction circuit 502, a second impedance correction circuit 504, and a single-pole triple-throw switch (Single Pole Triple Throw, SP3T) 506. The single-pole triple-throw switch 506 includes one movable end and three movable ends, the movable end is grounded, and the three movable ends respectively correspond to three connection states. One end of the first impedance correction circuit 502 is connected to the positive electrode $PV_{positive}$, of the direct current voltage source PV, and the other end is connected to the first movable end of the single-pole triple-throw switch 506. Therefore, when the single-pole triple-throw switch 506 is switched to a connection state of the first movable end, one end of the first impedance correction circuit 502 is grounded, and the other end is connected to the positive electrode $PV_{positive}$ of the direct current voltage source PV, so that the positive terminal-to-ground impedance circuit R1 of the direct current voltage source PV and the positive terminal part R3 of the intrinsic ground impedance part of the direct current busbar capacitor are connected in parallel between the positive terminal of the direct current busbar capacitor and a grounding (PE) node. In this case, it should be understood that, positive terminal-to-ground equivalent impedance $RES_{positive}$ of the direct current busbar capacitor needs to be considered as equivalent impedance between the positive terminal of the direct current busbar capacitor and the ground. In other words, $RES_{positive}$ meets Formula (5):

$$\frac{1}{RES_{positive}} = \frac{1}{R_1} + \frac{1}{R_3} + \frac{1}{R_{502}} \tag{5}$$

Herein, $R_1$ represents a magnitude of the positive terminal-to-ground impedance circuit R1 of the direct current voltage source PV, $R_3$ represents a magnitude of the positive terminal part R3 of the intrinsic ground impedance part of the direct current busbar capacitor, and $R_{502}$ represents a magnitude of the first impedance correction circuit 502. Therefore, the single-pole triple-throw switch 506 is switched to the connection state of the first movable end, to introduce the first impedance correction circuit 502 and reduce a magnitude of the positive terminal-to-ground equivalent impedance $RES_{positive}$, of the direct current busbar capacitor, and the magnitude of the first impedance correction circuit 502 is adjusted, to adjust the magnitude of the positive terminal-to-ground equivalent impedance $RES_{positive}$, of the direct current busbar capacitor. Further, the magnitude of the positive terminal-to-ground equivalent impedance $RES_{positive}$, of the direct current busbar capacitor is adjusted, to adjust impedance matching between the positive terminal-to-ground equivalent impedance $RES_{positive}$, of the direct current busbar capacitor and negative terminal-to-ground equivalent impedance of the direct current busbar capacitor, so that the positive terminal-to-ground equivalent impedance $RES_{positive}$, of the direct current busbar capacitor can match the negative terminal-to-ground equivalent impedance of the direct current busbar capacitor, to pre-control a magnitude of a common mode current generated when the inverter is grid-tied, in other words, pre-control a magnitude of a common mode impulse current (leakage current). Herein, the negative terminal-to-ground equivalent impedance of the direct current busbar capacitor needs to be understood as a magnitude of equivalent impedance of a parallel connection of the negative terminal-to-ground impedance circuit R2 of the direct current voltage source PV and the negative terminal part R4 of the intrinsic ground impedance part of the direct current busbar capacitor.

Continue to refer to FIG. 5. One end of the second impedance correction circuit 504 is connected to the negative electrode $PV_{negative}$ of the direct current voltage source PV, and the other end is connected to the second movable end of the single-pole triple-throw switch 506. The third movable end of the single-pole triple-throw switch 506 may correspond to a case in which the single-pole triple-throw switch 506 is connected to neither the first impedance correction circuit 502 nor the second impedance correction circuit 504, for example, is grounded. Therefore, when the single-pole triple-throw switch 506 is switched to a connection state of the second movable end, one end of the second impedance correction circuit 504 is grounded, and the other end is connected to the negative electrode $PV_{negative}$ of the direct current voltage source PV, so that the negative terminal-to-ground impedance circuit R2 of the direct current voltage source PV and the negative terminal part R4 of the intrinsic ground impedance part of the direct current busbar capacitor are connected in parallel between the negative terminal of the direct current busbar capacitor and a grounding (PE) node. In this case, it should be understood that, the negative terminal-to-ground equivalent impedance $RES_{negative}$ of the direct current busbar capacitor needs to be considered as equivalent impedance between the negative terminal of the direct current busbar capacitor and the ground. In other words, $RES_{negative}$ meets Formula (6):

$$\frac{1}{RES_{negative}} = \frac{1}{R_2} + \frac{1}{R_4} + \frac{1}{R_{504}} \qquad (6)$$

Herein, $R_2$ represents a magnitude of the negative terminal-to-ground impedance circuit R2 of the direct current voltage source PV, $R_4$ represents a magnitude of the negative terminal part R4 of the intrinsic ground impedance part of the direct current busbar capacitor, and $R_{504}$ represents a magnitude of the second impedance correction circuit 504. Therefore, when the single-pole triple-throw switch 506 is switched to the connection state of the second movable end, the second impedance correction circuit 504 may be introduced, and the magnitude of the negative terminal-to-ground equivalent impedance $RES_{negative}$ of the direct current busbar capacitor may be reduced, and the magnitude of the second impedance correction circuit 504 is adjusted, to adjust the magnitude of the negative terminal-to-ground equivalent impedance $RES_{negative}$ of the direct current busbar capacitor. Further, the magnitude of the negative terminal-to-ground equivalent impedance $RES_{negative}$ of the direct current busbar capacitor is adjusted, to adjust impedance matching between the positive terminal-to-ground equivalent impedance of the direct current busbar capacitor and the negative terminal-to-ground equivalent impedance $RES_{negative}$ of the direct current busbar capacitor, so that the positive terminal-to-ground equivalent impedance of the direct current busbar capacitor can match the negative terminal-to-ground equivalent impedance $RES_{negative}$ of the direct current busbar capacitor, to pre-control the magnitude of the common mode current generated when the inverter is grid-tied, in other words, pre-control a magnitude of a common mode impulse current (leakage current). Herein, the positive terminal-to-ground equivalent impedance of the direct current busbar capacitor needs to be understood as a magnitude of equivalent impedance of a parallel connection of the positive terminal-to-ground impedance circuit R1 of the direct current voltage source PV and the positive terminal part R3 of the intrinsic ground impedance part of the direct current busbar capacitor.

Affected by a change in an environmental factor such as a temperature and component aging, the positive terminal-to-ground equivalent impedance $RES_{positive}$, of the direct current busbar capacitor or the negative terminal-to-ground equivalent impedance $RES_{negative}$ of the direct current busbar capacitor changes, resulting in impedance mismatching. Consequently, a positive terminal voltage $BUS_{positive}$, of the direct current busbar capacitor or a negative terminal voltage $BUS_{negative}$ of the direct current busbar capacitor fluctuate greatly, and a BUSN potential is not zero. In this case, if a grid-tied switch of the inverter is closed, large impact of the common mode current is generated. Specifically, in the circuit structure of the common mode current controller of the inverter shown in FIG. 5, when it is detected that the midpoint-to-ground voltage BUSN of the direct current busbar capacitor is greater than the first threshold, it indicates that the BUSN potential floats upward and goes beyond a normal range and a large common mode impulse current at a grid-tied instant may be generated. In this case, the single-pole triple-throw switch 506 is switched to the connection state of the first movable end, to reduce the magnitude of the positive terminal-to-ground equivalent impedance $RES_{positive}$ of the direct current busbar capacitor, so as to effectively reduce an upward floating degree of the BUSN potential, and help restore impedance matching and control a magnitude of the common mode impulse current. In addition, when it is detected that the midpoint-to-ground voltage BUSN of the direct current busbar capacitor is less than a second threshold, it indicates that the BUSN potential floats downward and goes beyond the normal range and a large common mode impulse current at the grid-tied instant may be generated. In this case, the single-pole triple-throw switch 506 is switched to the connection state of the second movable end, to reduce the magnitude of the negative terminal-to-ground equivalent impedance $RES_{negative}$ of the direct current busbar capacitor, so as to effectively reduce a downward floating degree of the BUSN potential and control a magnitude of the common mode impulse current.

In the circuit structure of the common mode current controller of the inverter shown in FIG. 5, the common mode current controller 500 includes: the single-pole triple-throw switch 506, where the non-movable end of the single-pole triple-throw switch 506 is grounded, and the movable ends of the single-pole triple-throw switch 506 include the first movable end, the second movable end, and the third movable end; the first impedance correction circuit 502, where one end of the first impedance correction circuit 502 is connected to the first movable end of the single-pole triple-throw switch 506, and the other end of the first impedance correction circuit 502 is connected to the positive terminal of the direct current busbar capacitor; and the second impedance correction circuit 504, where one end of the second impedance correction circuit 504 is connected to the second movable end of the single-pole triple-throw switch 506, and the other end of the second impedance correction circuit 504 is connected to the negative terminal of the direct current busbar capacitor. The common mode current controller 500 is configured to: when the midpoint-to-ground voltage BUSN of the direct current busbar capacitor is greater than the first threshold, switch the single-pole triple-throw switch 506 to the first movable end, so that the first impedance correction circuit 502 and the positive terminal part of the intrinsic ground impedance part of the direct current busbar capacitor are connected in parallel between the positive terminal of the direct current busbar capacitor and the ground, to reduce a magnitude of the positive terminal-to-ground equivalent impedance of the direct current busbar capacitor. The common mode current controller 500 is configured to: when the midpoint-to-ground voltage BUSN of the direct current busbar capacitor is less than the second threshold, switch the single-pole triple-throw switch 506 to the second movable end, so that the second impedance correction circuit 504 and a negative terminal part of the intrinsic ground impedance part of the direct current busbar capacitor are connected in parallel between the negative terminal of the direct current busbar capacitor and the ground, to reduce a magnitude of the negative terminal-to-ground equivalent impedance of the direct current busbar capacitor. The common mode current controller 500 adjusts impedance matching between the positive terminal-to-ground equivalent impedance of the direct current busbar capacitor and the negative terminal-to-ground equivalent impedance of the direct current busbar capacitor, so that the inverter can pre-control the magnitude of the common mode current generated when the inverter is grid-tied.

Therefore, in the circuit structure of the common mode current controller of the inverter shown in FIG. 5, introduction of the first impedance correction circuit 502 or the second impedance correction circuit 504 and adjustment of impedance matching are implemented based on the midpoint-to-ground voltage BUSN of the direct current busbar capacitor, so that the magnitude of the common mode current generated when the inverter is grid-tied can be pre-controlled before the grid-tied switch of the inverter is closed, to help reduce a degree of complexity of a system design and reduce costs of the system design.

In some example embodiments, the first threshold or the second threshold may be preset, or may be set based on a corresponding inverter type and a parameter, or may be adjusted based on a corresponding state of a power grid and a use scenario. These may be adjusted and improved based on a specific application environment, and are not specifically limited herein.

In some example embodiments, the magnitude of the first impedance correction circuit 502 or the second impedance correction circuit 504 may be preset, or may be set based on a corresponding inverter type and a parameter, or may be adjusted based on a corresponding state of a power grid and a use scenario. These may be adjusted and improved based on a specific application environment, and are not specifically limited herein.

In some example embodiments, a proper technical means may be used for a connection state switching mechanism of the single-pole triple-throw switch 506 and a specific structure of the single-pole triple-throw switch 506. For example, conduction or breaking of a circuit may be controlled by using a controllable electronic component, including but not limited to a thyristor, a transistor, a field effect transistor, a silicon controlled thyristor, and a relay. These may be adjusted and improved based on a specific application environment, and are not specifically limited herein.

In some example embodiments, the midpoint-to-ground voltage BUSN of the direct current busbar capacitor may be obtained through direct measurement, for example, may be obtained by using a voltage sensor; or may be obtained through indirect measurement, for example, may be determined based on the positive terminal voltage $BUS_{positive}$ and a negative terminal voltage $BUS_{negative}$ of the direct current busbar capacitor of the inverter. For example, the positive terminal-to-ground voltage $BUS_{positive}$ and the negative terminal-to-ground voltage $BUS_{negative}$ of the direct current busbar capacitor 106 are measured, and then a sum of $BUS_{positive}$ and $BUS_{negative}$ is divided by two.

In some example embodiments, an impedance value of the first impedance correction circuit 502 and an impedance value of the second impedance correction circuit 504 are both adjustable, and the impedance value of the first impedance correction circuit 502 and the impedance value of the second impedance correction circuit 504 are adjusted, so that a positive busbar and a negative busbar of the inverter have symmetric impedance to ground.

In some example embodiments, the common mode current controller 500 is a part of the grid-tied inverter, and the grid-tied inverter includes a direct current-direct current DC-DC converter and a direct current-alternating current DC-AC converter. The common mode current controller 500 is between the DC-DC converter and the DC-AC converter.

In some example embodiments, the common mode current controller 500 is further configured to control release of a residual charge of a Y capacitor at a terminal of the inverter. In a possible implementation, the Y capacitor at the terminal is a capacitor on an AC side of the inverter.

In some example embodiments, in a photovoltaic power generation system including a plurality of parallel grid-tied inverters, each grid-tied inverter and the common mode current controller 500 include a same device and similar structures, to have an improved capability of resisting impact of a common mode current generated at a grid-tied instant of the photovoltaic power generation system.

In some example embodiments, the common mode current controller 500 is part of the photovoltaic power generation system, the photovoltaic power generation system includes the grid-tied inverter, the grid-tied inverter includes the common mode current controller 500, and the first threshold and the second threshold are set based on a state of a power grid to which the grid-tied inverter is tied.

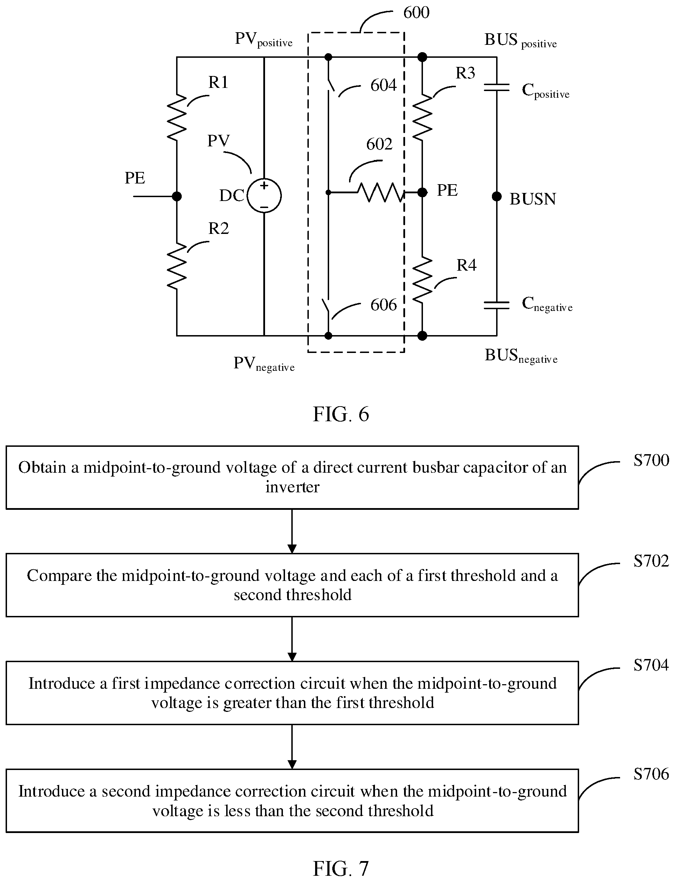

FIG. 6 is a schematic diagram of a circuit structure of a common mode current controller of an inverter in another implementation according to an embodiment of this application. As shown in FIG. 6, a positive electrode of a direct current voltage source PV is denoted as $PV_{positive}$, a negative electrode is denoted as $PV_{negative}$, and there is a positive terminal-to-ground impedance circuit R1 and a negative terminal-to-ground impedance circuit R2. One end of the positive terminal-to-ground impedance circuit R1 of the direct current voltage source PV is grounded (PE), and the other end is connected to the positive electrode $PV_{positive}$ of the direct current voltage source PV One end of the negative terminal-to-ground impedance circuit R2 of the direct current voltage source PV is grounded (PE), and the other end is connected to the negative electrode $PV_{negative}$ of the direct current voltage source PV A circuit equivalent component of a direct current busbar capacitor includes a positive terminal part $C_{positive}$ of the direct current busbar capacitor, a negative terminal part $C_{negative}$ of the direct current busbar capacitor, a positive terminal part R3 of an intrinsic ground impedance part of the direct current busbar capacitor, and a negative terminal part R4 of the intrinsic ground impedance part of the direct current busbar capacitor. One end of the positive terminal part $C_{positive}$ of the direct current busbar capacitor is a positive terminal of the direct current busbar capacitor, the positive terminal of the direct current busbar capacitor is connected to the positive terminal part R3 of the intrinsic ground impedance part of the direct current busbar capacitor, the other end is a midpoint of the direct current busbar capacitor, and a midpoint-to-ground voltage of the direct current busbar capacitor is denoted as BUSN. One end of the negative terminal part $C_{negative}$ of the direct current busbar capacitor is a negative terminal of the direct current busbar capacitor, the negative terminal of the direct current busbar capacitor is connected to the negative terminal part R4 of the intrinsic ground impedance part of the direct current busbar capacitor, and the other end is the midpoint of the direct current busbar capacitor. One end of each of the positive terminal part R3 of the intrinsic ground impedance part of the direct current busbar capacitor and the negative terminal part R4 of the intrinsic ground impedance part of the direct current busbar capacitor is grounded. The positive electrode and the negative electrode of the direct current voltage source PV are respectively connected to the positive terminal part $C_{positive}$ of the direct current busbar capacitor and the negative terminal part $C_{negative}$ of the direct current busbar capacitor. Therefore, one end of each of the positive terminal-to-ground impedance circuit R1 of the direct current voltage source PV and the positive terminal part R3 of the intrinsic ground impedance part of the direct current busbar capacitor is grounded, and the other end is connected to the positive electrode of the direct current voltage source PV, to form a parallel connection relationship. One end of each of the negative terminal-to-ground impedance circuit R2 of the direct current voltage source PV and the negative terminal part R4 of the intrinsic ground impedance part of the direct current busbar capacitor is grounded, and the other end is connected to the negative electrode of the direct current voltage source PV, to form a parallel connection relationship.

Continue to refer to FIG. 6. A common mode current controller 600 includes an impedance correction circuit 602, a first switch 604, and a second switch 606. One end of the impedance correction circuit 602 is grounded, and the other end is connected to both the first switch 604 and the second switch 606. One end of the first switch 604 is connected to the impedance correction circuit 602, and the other end is connected to the positive electrode $PV_{positive}$ of the direct current voltage source PV One end of the second switch 606 is connected to the impedance correction circuit 602, and the other end is connected to the negative electrode $PV_{negative}$ of the direct current voltage source PV Therefore, when the first switch 604 is closed and the second switch 606 is opened, one end of the impedance correction circuit 602 is grounded, and the other end is connected to the positive electrode of the direct current voltage source PV, so that the positive terminal-to-ground impedance circuit R1 of the direct current voltage source PV and the positive terminal part R3 of the intrinsic ground impedance part of the direct current busbar capacitor are connected in parallel between the positive terminal of the direct current busbar capacitor and a grounding (PE) node. In this case, it should be understood that, positive terminal-to-ground equivalent impedance $RES_{positive}$ of the direct current busbar capacitor needs to be considered as equivalent impedance between the positive terminal of the direct current busbar capacitor and the ground. In other words, $RES_{positive}$ meets Formula (7):

$$\frac{1}{RES_{positive}} = \frac{1}{R_1} + \frac{1}{R_3} + \frac{1}{R_{602}} \tag{7}$$

Herein, $R_1$ represents a magnitude of the positive terminal-to-ground impedance circuit R1 of the direct current voltage source PV, $R_3$ represents a magnitude of the positive terminal part R3 of the intrinsic ground impedance part of the direct current busbar capacitor, and $R_{602}$ represents a magnitude of the impedance correction circuit 602. Therefore, the first switch 604 is closed and the second switch 606 is opened, to introduce the impedance correction circuit 602 and reduce a magnitude of the positive terminal-to-ground equivalent impedance $RES_{positive}$, of the direct current busbar capacitor, and the magnitude of the impedance correction circuit 602 is adjusted, to adjust the magnitude of the positive terminal-to-ground equivalent impedance $RES_{positive}$ of the direct current busbar capacitor. Further, the magnitude of the positive terminal-to-ground equivalent impedance $RES_{positive}$ of the direct current busbar capacitor is adjusted, to adjust impedance matching between the positive terminal-to-ground equivalent impedance $RES_{positive}$, of the direct current busbar capacitor and negative terminal-to-ground equivalent impedance of the direct current busbar capacitor, so that the positive terminal-to-ground equivalent impedance $RES_{positive}$, of the direct current busbar capacitor can match the negative terminal-to-ground equivalent impedance of the direct current busbar capacitor, to pre-control a magnitude of a common mode current generated when the inverter is grid-tied, in other words, pre-control a magnitude of a common mode impulse current (leakage current). Herein, the negative terminal-to-ground equivalent impedance of the direct current busbar capacitor needs to be understood as a magnitude of equivalent impedance of a parallel connection of the negative terminal-to-ground impedance circuit R2 of the direct current voltage source PV and the negative terminal part R4 of the intrinsic ground impedance part of the direct current busbar capacitor.

Continue to refer to FIG. 6. When the first switch 604 is opened and the second switch 606 is closed, one end of the impedance correction circuit 602 is grounded, and the other end is connected to the negative electrode of the direct current voltage source PV, so that the negative terminal-to-ground impedance circuit R2 of the direct current voltage source PV and the negative terminal part R4 of the intrinsic ground impedance part of the direct current busbar capacitor are connected in parallel between the negative terminal of the direct current busbar capacitor and a grounding (PE) node. In this case, it should be understood that, the negative terminal-to-ground equivalent impedance $RES_{negative}$ of the direct current busbar capacitor needs to be considered as equivalent impedance between the negative terminal of the direct current busbar capacitor and the ground. In other words, $RES_{negative}$ meets Formula (8):

$$\frac{1}{RES_{negative}} = \frac{1}{R_2} + \frac{1}{R_4} + \frac{1}{R_{602}} \tag{8}$$

Herein, $R_2$ represents a magnitude of the negative terminal-to-ground impedance circuit R2 of the direct current voltage source PV, $R_4$ represents a magnitude of the negative terminal part R4 of the intrinsic ground impedance part of the direct current busbar capacitor, and $R_{602}$ represents the magnitude of the impedance correction circuit 602. Therefore, the first switch 604 is opened and the second switch 606 is closed, to introduce the impedance correction circuit 602 and reduce a magnitude of the negative terminal-to-ground equivalent impedance $RES_{negative}$ of the direct current busbar capacitor, and the magnitude of the impedance correction circuit 602 is adjusted, to adjust the magnitude of the negative terminal-to-ground equivalent impedance $RES_{negative}$ of the direct current busbar capacitor. Further, the magnitude of the negative terminal-to-ground equivalent impedance $RES_{negative}$ of the direct current busbar capacitor is adjusted, to adjust impedance matching between the positive terminal-to-ground equivalent impedance of the direct current busbar capacitor and the negative terminal-to-ground equivalent impedance $RES_{negative}$ of the direct current busbar capacitor, so that the positive terminal-to-ground equivalent impedance of the direct current busbar capacitor can match the negative terminal-to-ground equivalent impedance $RES_{negative}$ of the direct current busbar capacitor, to pre-control the magnitude of the common mode current generated when the inverter is grid-tied, in other words, pre-control the magnitude of the common mode impulse current (leakage current). Herein, the positive terminal-to-ground equivalent impedance of the direct current busbar capacitor needs to be understood as a magnitude of equivalent impedance of a parallel connection of the positive terminal-to-ground impedance circuit R1 of the direct current voltage source PV and the positive terminal part R3 of the intrinsic ground impedance part of the direct current busbar capacitor.

Affected by a change in an environmental factor such as a temperature and component aging, the positive terminal-to-ground equivalent impedance $RES_{positive}$, of the direct current busbar capacitor or the negative terminal-to-ground equivalent impedance $RES_{negative}$ of the direct current busbar capacitor changes, resulting in impedance mismatching. Consequently, a positive terminal voltage $BUS_{positive}$, of the direct current busbar capacitor or a negative terminal voltage $BUS_{negative}$ of the direct current busbar capacitor fluctuate greatly, and a BUSN potential is not zero. In this case, if a grid-tied switch of the inverter is closed, large impact of the common mode current is generated. In the circuit structure of the common mode current controller of the inverter shown in FIG. 6, when it is detected that the midpoint-to-ground voltage BUSN of the direct current busbar capacitor is greater than a first threshold, it indicates that the BUSN potential floats upward and goes beyond a normal range and a large common mode impulse current at a grid-tied instant may be generated. In this case, the first switch 604 is closed and the second switch 606 is opened, to reduce the magnitude of the positive terminal-to-ground equivalent impedance $RES_{positive}$ of the direct current busbar capacitor, so as to effectively reduce an upward floating degree of the BUSN potential, and help restore impedance matching and control a magnitude of the common mode impulse current. In addition, when it is detected that the midpoint-to-ground voltage BUSN of the direct current busbar capacitor is less than a second threshold, it indicates that the BUSN potential floats downward and goes beyond the normal range and a large common mode impulse current at the grid-tied instant may be generated. In this case, the first switch 604 is opened and the second switch 606 is closed, to reduce the magnitude of the negative terminal-to-ground equivalent impedance $RES_{negative}$ of the direct current busbar capacitor, so as to effectively reduce a downward floating degree of the BUSN potential and control the magnitude of the common mode impulse current.

In the circuit structure of the common mode current controller of the inverter shown in FIG. 6, the common mode current controller 600 includes: the first switch 604, where one end of the first switch 604 is connected to the positive terminal of the direct current busbar capacitor; the second switch 606, where one end of the second switch 606 is connected to the negative terminal of the direct current busbar capacitor; and the impedance correction circuit 602, where one end of the impedance correction circuit 602 is grounded, and the other end of the impedance correction circuit 602 is connected to both the other end of the first switch 604 and the other end of the second switch 606. The common mode current controller 600 is configured to: when the midpoint-to-ground voltage BUSN of the direct current busbar capacitor is greater than the first threshold, close the first switch 604, and open the second switch 606, so that the impedance correction circuit 602 and the positive terminal part of the intrinsic ground impedance part of the direct current busbar capacitor are connected in parallel between the positive terminal of the direct current busbar capacitor and the ground, to reduce the magnitude of the positive terminal-to-ground equivalent impedance of the direct current busbar capacitor. The common mode current controller 600 is configured to: when the midpoint-to-ground voltage of the direct current busbar capacitor is less than the second threshold, close the second switch 606, and open the first switch 604, so that the impedance correction circuit and the negative terminal part of the intrinsic ground impedance part of the direct current busbar capacitor are connected in parallel between the negative terminal of the direct current busbar capacitor and the ground, to reduce the magnitude of the negative terminal-to-ground equivalent impedance of the direct current busbar capacitor. The common mode current controller 600 adjusts impedance matching between the positive terminal-to-ground equivalent impedance of the direct current busbar capacitor and the negative terminal-to-ground equivalent impedance of the direct current busbar capacitor, so that the inverter can pre-control the magnitude of the common mode current generated when the inverter is grid-tied.

Therefore, in the circuit structure of the common mode current controller of the inverter shown in FIG. 6, introduction of the impedance correction circuit 602 and adjustment of impedance matching are implemented based on the midpoint-to-ground voltage BUSN of the direct current busbar capacitor, so that the magnitude of the common mode current generated when the inverter is grid-tied can be pre-controlled before the grid-tied switch of the inverter is closed, to help reduce a degree of complexity of a system design and reduce costs of the system design.

In some example embodiments, the first threshold or the second threshold may be preset, or may be set based on a corresponding inverter type and a parameter, or may be adjusted based on a corresponding state of a power grid and a use scenario. These may be adjusted and improved based on a specific application environment, and are not specifically limited herein.

In some example embodiments, the magnitude of the impedance correction circuit 602 may be preset, or may be set based on a corresponding inverter type and a parameter, or may be adjusted based on a corresponding state of a power grid and a use scenario. In addition, the magnitude of the impedance correction circuit 602 may be separately set for adjusting the magnitude of the positive terminal-to-ground equivalent impedance $RES_{positive}$, of the direct current busbar capacitor or the negative terminal-to-ground equivalent impedance $RES_{negative}$ of the direct current busbar capacitor. These may be adjusted and improved based on a specific application environment, and are not specifically limited herein.

In some example embodiments, a proper technical means may be used for a closing/opening mechanism of the first switch 604 and the second switch 606 and a specific structure of the first switch 604 and the second switch 606. For example, conduction or breaking of a circuit may be controlled by using a controllable electronic component, including but not limited to a thyristor, a transistor, a field effect transistor, a silicon controlled thyristor, and a relay. These may be adjusted and improved based on a specific application environment, and are not specifically limited herein.

In some example embodiments, the midpoint-to-ground voltage BUSN of the direct current busbar capacitor may be obtained through direct measurement, for example, may be obtained by using a voltage sensor; or may be obtained through indirect measurement, for example, may be determined based on the positive terminal voltage $BUS_{positive}$ and a negative terminal voltage $BUS_{negative}$ of the direct current busbar capacitor of the inverter. For example, the positive terminal-to-ground voltage $BUS_{positive}$ and the negative terminal-to-ground voltage $BUS_{negative}$ of the direct current busbar capacitor 106 are measured, and then a sum of $BUS_{positive}$ and $BUS_{negative}$ is divided by two.

In some example embodiment, an impedance value of the impedance correction circuit 602 is adjustable, the impedance value of the impedance correction circuit is set to a first impedance value when the midpoint-to-ground voltage is greater than the first threshold, the impedance value of the impedance correction circuit is set to a second impedance value when the midpoint-to-ground voltage is less than the second threshold, and the first impedance value and the second impedance value are set, so that a positive busbar and a negative busbar of the inverter have symmetric impedance to ground.

In some example embodiments, the common mode current controller 600 is a part of the grid-tied inverter, and the grid-tied inverter includes a direct current-direct current DC-DC converter and a direct current-alternating current DC-AC converter. The common mode current controller 600 is between the DC-DC converter and the DC-AC converter.

In some example embodiments, the common mode current controller 600 is further configured to control release of a residual charge of a Y capacitor at a terminal of the inverter. In a possible implementation, the Y capacitor at the terminal is a capacitor on an AC side of the inverter.

In some example embodiments, in a photovoltaic power generation system including a plurality of parallel grid-tied inverters, each grid-tied inverter and the common mode current controller 600 include a same device and similar structures, to have an improved capability of resisting impact of a common mode current generated at a grid-tied instant of the photovoltaic power generation system.

In some example embodiments, the common mode current controller 600 is part of the photovoltaic power generation system, the photovoltaic power generation system includes the grid-tied inverter, the grid-tied inverter includes the common mode current controller 600, and the first threshold and the second threshold are set based on a state of a power grid to which the grid-tied inverter is tied.

FIG. 7 is a schematic flowchart of a common mode current control method for an inverter according to an embodiment of this application. As shown in FIG. 7, the control method includes the following steps.

Step S700: Obtain a midpoint-to-ground voltage of a direct current busbar capacitor of the inverter.

The midpoint-to-ground voltage of the direct current busbar capacitor may be obtained through direct measurement, for example, may be obtained by using a voltage sensor; or may be obtained through indirect measurement, for example, may be determined based on a positive terminal voltage and a negative terminal voltage of the direct current busbar capacitor of the inverter. Specifically, the positive terminal voltage and the negative terminal voltage of the direct current busbar capacitor of the inverter may be separately sampled, and the midpoint-to-ground voltage is obtained based on the positive terminal voltage and the negative terminal voltage of the direct current busbar capacitor of the inverter.

Step S702: Compare the midpoint-to-ground voltage and each of a first threshold and a second threshold.

The first threshold or the second threshold may be preset, or may be set based on a corresponding inverter type and a parameter, or may be adjusted based on a corresponding state of a power grid and a use scenario.

Step S704: Introduce a first impedance correction circuit when the midpoint-to-ground voltage is greater than the first threshold.

One end of the first impedance correction circuit is grounded, and the first impedance correction circuit and a positive terminal part of an intrinsic ground impedance part of the direct current busbar capacitor are connected in parallel.

In a possible implementation, the inverter receives a direct current input from a direct current voltage source. One end of the first impedance correction circuit is connected to a positive electrode of the direct current voltage source, the other end is connected to one end of a first switch, and the other end of the first switch is grounded. Therefore, when the first switch is closed, one end of the first impedance correction circuit is grounded, and the other end is connected to the positive electrode of the direct current voltage source, so that a positive terminal-to-ground impedance circuit of the direct current voltage source PV and the positive terminal part of the intrinsic ground impedance part of the direct current busbar capacitor are connected in parallel between a positive terminal of the direct current busbar capacitor and a grounding (PE) node. When it is detected that the midpoint-to-ground voltage of the direct current busbar capacitor is greater than the first threshold, it indicates that a potential floats upward and goes beyond a normal range and a large common mode impulse current at a grid-tied instant may be generated. In this case, the first switch is closed, to reduce a magnitude of positive terminal-to-ground equivalent impedance of the direct current busbar capacitor, so as to effectively reduce an upward floating degree of the potential and control a magnitude of the common mode impulse current.

Step S706: Introduce a second impedance correction circuit when the midpoint-to-ground voltage is less than the second threshold.

One end of the second impedance correction circuit is grounded, and the second impedance correction circuit and a negative terminal part of the intrinsic ground impedance part of the direct current busbar capacitor are connected in parallel.

In a possible implementation, the inverter receives the direct current input from the direct current voltage source. One end of the second impedance correction circuit is connected to a negative electrode of the direct current voltage source, the other end is connected to one end of a second switch, and the other end of the second switch is grounded. Therefore, when the second switch is closed, one end of the second impedance correction circuit is grounded, and the other end is connected to the negative electrode of the direct current voltage source, so that a negative terminal-to-ground impedance circuit of the direct current voltage source PV and the negative terminal part of the intrinsic ground impedance part of the direct current busbar capacitor are connected in parallel between the negative terminal of the direct current busbar capacitor and the grounding (PE) node. When it is detected that the midpoint-to-ground voltage of the direct current busbar capacitor is less than the second threshold, it indicates that the potential floats downward and goes beyond the normal range and a large common mode impulse current at the grid-tied instant may be generated. In this case, the second switch is closed, to reduce a magnitude of negative terminal-to-ground equivalent impedance of the direct current busbar capacitor, so as to effectively reduce a downward floating degree of the potential and control a magnitude of the common mode impulse current.

Therefore, in the common mode current control method for the inverter shown in FIG. 7, introduction of the impedance correction circuit and adjustment of impedance matching are implemented based on the midpoint-to-ground voltage of the direct current busbar capacitor, so that a magnitude of a common mode current generated when the inverter is grid-tied can be pre-controlled before a grid-tied switch of the inverter is closed, to help reduce a degree of complexity of a system design and reduce costs of the system design.

Specific embodiments provided in this application may be implemented by using any one or a combination of hardware, software, firmware, or a solid-state logic circuit, and may be implemented in combination with signal processing, control, and/or a dedicated circuit. A device or an apparatus provided in specific embodiments of this application may include one or more processors (for example, a microprocessor, a controller, a digital signal processor (DSP), an application-specific integrated circuit (ASIC), or a field programmable gate array (FPGA)), and the processors process various computer-executable instructions, to control operation of the device or the apparatus. The device or the apparatus provided in specific embodiments of this application may include a system bus or a data transmission system in which various components are coupled together. The system bus may include any one of different bus structures or a combination of different bus structures, for example, a memory bus or a memory controller, a peripheral bus, a universal serial bus, and/or a processor or a local bus for which any of a plurality of bus architectures is used. The device or the apparatus provided in specific embodiments of this application may be independently provided, or may be a part of a system, or may be a part of another device or apparatus.

Specific embodiments provided in this application may include a computer-readable storage medium or a combination with the computer-readable storage medium, for example, one or more storage devices that can provide non-transitory data storage. The computer-readable storage medium/storage device may be configured to store data, a program, and/or instructions, and when the data, the program, and/or the instructions are executed by a processor of the device or the apparatus provided in specific embodiments of this application, the device or the apparatus performs a related operation. The computer-readable storage medium/storage device may include one or more of the following features: a volatile feature, a non-volatile feature, a dynamic feature, a static feature, a read/write feature, a read-only feature, a random access feature, a sequential access feature, location addressability, file addressability, and content addressability. In one or more example embodiments, the computer-readable storage medium/storage device may be integrated into the device or the apparatus provided in specific embodiments of this application, or belong to a common system. The computer-readable storage medium/storage device may include an optical storage device, a semiconductor storage device, a magnetic storage device, or the like, and may further include a random access memory (RAM), a flash memory, a read-only memory (ROM), an erasable programmable read only memory (EPROM), an electrically erasable programmable read-only memory (EEPROM), a register, a hard disk, a removable disk, a recordable and/or rewritable compact disc (CD), a digital versatile disc (DVD), a large-capacity storage medium device, or any other form of suitable storage medium.

The foregoing is an implementation of embodiments of this application. It should be noted that steps in the method described in specific embodiments of this application may be adjusted, combined, and deleted based on an actual requirement. In the foregoing embodiments, the description of each embodiment has respective focuses. For a part that is not described in detail in an embodiment, refer to related descriptions in other embodiments. It may be understood that a structure shown in embodiments of this application and the accompanying drawings do not constitute a specific limitation on a related apparatus or system. In some other embodiments of this application, the related apparatus or system may include more or fewer components than those shown in specific embodiments and the accompanying drawings, or combine some components, or split some components, or have different component arrangements. A person skilled in the art can understand that various modifications or changes may be made to the arrangements, operations, and details of the method and device recorded in specific embodiments without departing from the spirit and scope of specific embodiments of this application. Several improvements and modifications may be further made without departing from the principle of embodiments of this application. The improvements and modifications are also considered to fall within the protection scope of this application.

**Claims**

1. A common mode current controller of an inverter, wherein the common mode current controller is connected between a direct current busbar capacitor of the inverter and a direct current input voltage source of the inverter, a positive terminal and a negative terminal of the direct current busbar capacitor are respectively connected to a positive terminal and a negative terminal of the direct current input voltage source, and the common mode current controller comprises:

   a switch; and
   an impedance correction circuit, wherein one end of the impedance correction circuit is grounded, the other end of the impedance correction circuit is connected to one end of the switch, and the other end of the switch is connected to one terminal in the positive terminal and the negative terminal of the direct current busbar capacitor, so that the common mode current controller and at least a part of an intrinsic ground impedance part of the direct current busbar capacitor are connected in parallel between the one terminal in the positive terminal and the negative terminal of the direct current busbar capacitor and the ground; and
   the common mode current controller is configured to: when a midpoint-to-ground voltage of the direct current busbar capacitor exceeds a threshold range, close the switch to adjust impedance matching between positive terminal-to-ground equivalent impedance of the direct current busbar capacitor and negative terminal-to-ground equivalent impedance of the direct current busbar capacitor, so that the inverter can pre-control a magnitude of a common mode current generated when the inverter is grid-tied.

2. The common mode current controller according to claim 1, wherein the midpoint-to-ground voltage of the direct current busbar capacitor is determined based on a positive terminal voltage of the direct current busbar capacitor and a negative terminal voltage of the direct current busbar capacitor.

3. The common mode current controller according to claim 1, wherein the other end of the switch is connected to the positive terminal of the direct current busbar capacitor, and when the midpoint-to-ground voltage of the direct current busbar capacitor is greater than a first threshold, the switch is closed, so that the impedance correction circuit and a positive terminal part of the intrinsic ground impedance part of the direct current busbar capacitor are connected in parallel between the positive terminal of the direct current busbar capacitor and the ground, to reduce a magnitude of the positive terminal-to-ground equivalent impedance of the direct current busbar capacitor.

4. The common mode current controller according to claim 1, wherein the other end of the switch is connected to the negative terminal of the direct current busbar capacitor, and when the midpoint-to-ground voltage of the direct current busbar capacitor is less than a first threshold, the switch is closed, so that the impedance correction circuit and a negative terminal part of the intrinsic ground impedance part of the direct current busbar capacitor are connected in parallel between the negative terminal of the direct current busbar capacitor and the ground, to reduce a magnitude of the negative terminal-to-ground equivalent impedance of the direct current busbar capacitor.

5. The common mode current controller according to claim 1, wherein an impedance value of the impedance correction circuit is adjustable, and the impedance value of the impedance correction circuit is adjusted, so that the positive terminal-to-ground equivalent impedance of the direct current busbar capacitor matches the negative terminal-to-ground equivalent impedance of the direct current busbar capacitor.

6. The common mode current controller according to any one of claims 1 to 5, wherein the inverter comprises a direct current-direct current DC-DC converter and a direct current-alternating current DC-AC converter, and the common mode current controller is between the DC-DC converter and the DC-AC converter.

7. The common mode current controller according to any one of claims 1 to 5, wherein the common mode current controller is further configured to control release of a residual charge of a Y capacitor at a terminal of the inverter.

8. The common mode current controller according to any one of claims 1 to 5, wherein the inverter is a grid-tied inverter of a photovoltaic power generation system, and the common mode current controller is configured to control a magnitude of a common mode current generated when the photovoltaic power generation system is grid-tied.

9. A common mode current controller of an inverter, wherein the common mode current controller is connected between a direct current busbar capacitor of the inverter and a direct current input voltage source of the inverter, a positive terminal and a negative terminal of the direct current busbar capacitor are respectively connected to a positive terminal and a negative terminal of the direct current input voltage source, and the common mode current controller comprises:

a first switch, wherein one end of the first switch is connected to the positive terminal of the direct current busbar capacitor;
a second switch, wherein one end of the second switch is connected to the negative terminal of the direct current busbar capacitor;
a first impedance correction circuit, wherein one end of the first impedance correction circuit is grounded, and the other end of the first impedance correction circuit is connected to the other end of the first switch; and
a second impedance correction circuit, wherein one end of the second impedance correction circuit is grounded, and the other end of the second impedance correction circuit is connected to the other end of the second switch;
the common mode current controller is configured to: when a midpoint-to-ground voltage of the direct current busbar capacitor is greater than a first threshold, close the first switch, and open the second switch, so that the first impedance correction circuit and a positive terminal part of an intrinsic ground impedance part of the direct current busbar capacitor are connected in parallel between the positive terminal of the direct current busbar capacitor and the ground, to reduce a magnitude of positive terminal-to-ground equivalent impedance of the direct current busbar capacitor;
the common mode current controller is configured to: when the midpoint-to-ground voltage of the direct current busbar capacitor is less than a second threshold, close the second switch, and open the first switch, so that the second impedance correction circuit and a negative terminal part of the intrinsic ground impedance part of the direct current busbar capacitor are connected in parallel between the negative terminal of the direct current busbar capacitor and the ground, to reduce a magnitude of negative terminal-to-ground equivalent impedance of the direct current busbar capacitor; and
the common mode current controller adjusts impedance matching between the positive terminal-to-ground equivalent impedance of the direct current busbar capacitor and the negative terminal-to-ground equivalent impedance of the direct current busbar capacitor, so that the inverter can pre-control a magnitude of a common mode current generated when the inverter is grid-tied.

10. The common mode current controller according to claim 9, wherein the midpoint-to-ground voltage of the direct current busbar capacitor is determined based on a positive terminal voltage of the direct current busbar capacitor and a negative terminal voltage of the direct current busbar capacitor.

11. The common mode current controller according to claim 9, wherein an impedance value of the first impedance correction circuit and an impedance value of the second impedance correction circuit are both adjustable, and the impedance value of the first impedance correction circuit and the impedance value of the second impedance correction circuit are adjusted, so that the positive terminal-to-ground equivalent impedance of the direct current busbar capacitor matches the negative terminal-to-ground equivalent impedance of the direct current busbar capacitor.

12. The common mode current controller according to any one of claims 9 to 11, wherein the inverter comprises a direct current-direct current DC-DC converter and a direct current-alternating current DC-AC converter, and the common mode current controller is between the DC-DC converter and the DC-AC converter.

13. The common mode current controller according to any one of claims 9 to 11, wherein the common mode current controller is further configured to control release of a residual charge of a Y capacitor at a terminal of the inverter.

14. The common mode current controller according to any one of claims 9 to 11, wherein the inverter is a grid-tied inverter of a photovoltaic power generation system, and the common mode current controller is configured to control a magnitude of a common mode current generated when the photovoltaic power generation system is grid-tied.

15. A common mode current controller of an inverter, wherein the common mode current controller is connected between a direct current busbar capacitor of the inverter and a direct current input voltage source of the inverter, a positive terminal and a negative terminal of the direct current busbar capacitor are respectively connected to a positive terminal and a negative terminal of the direct current input voltage source, and the common mode current controller comprises:

a single-pole triple-throw switch, wherein a non-movable end of the single-pole triple-throw switch is grounded, and a movable end of the single-pole triple-throw switch comprises a first movable end, a second movable end, and a third movable end;
a first impedance correction circuit, wherein one end of the first impedance correction circuit is connected to the first movable end of the single-pole triple-throw switch, and the other end of the first impedance correction circuit is connected to the positive terminal of the direct current busbar capacitor; and
a second impedance correction circuit, wherein one end of the second impedance correction circuit is connected to the second movable end of the single-pole triple-throw switch, and the other end of the second impedance correction circuit is connected to the negative terminal of the direct current busbar capacitor;
the common mode current controller is configured to: when a midpoint-to-ground voltage of the direct current busbar capacitor is greater than a first threshold, switch the single-pole triple-throw switch to the first movable end, so that the first impedance correction circuit and a positive terminal part of an intrinsic ground impedance part of the direct current busbar capacitor are connected in parallel between the positive terminal of the direct current busbar capacitor and the ground, to reduce a magnitude of positive terminal-to-ground equivalent impedance of the direct current busbar capacitor;
the common mode current controller is configured to: when the midpoint-to-ground voltage of the direct current busbar capacitor is less than a second threshold, switch the single-pole triple-throw switch to the second movable end, so that the second impedance correction circuit and a negative terminal part of the intrinsic ground impedance part of the direct current busbar capacitor are connected in parallel between the negative terminal of the direct current busbar capacitor and the ground, to reduce a magnitude of negative terminal-to-ground equivalent impedance of the direct current busbar capacitor; and
the common mode current controller adjusts impedance matching between the positive terminal-to-ground equivalent impedance of the direct current busbar capacitor and the negative terminal-to-ground equivalent impedance of the direct current busbar capacitor, so that the inverter can pre-control a magnitude of a common mode current generated when the inverter is grid-tied.

16. The common mode current controller according to claim 15, wherein the midpoint-to-ground voltage of the direct current busbar capacitor is determined based on a positive terminal voltage of the direct current busbar capacitor

and a negative terminal voltage of the direct current busbar capacitor.

**17.** The common mode current controller according to claim 15, wherein an impedance value of the first impedance correction circuit and an impedance value of the second impedance correction circuit are both adjustable, and the impedance value of the first impedance correction circuit and the impedance value of the second impedance correction circuit are adjusted, so that the positive terminal-to-ground equivalent impedance of the direct current busbar capacitor matches the negative terminal-to-ground equivalent impedance of the direct current busbar capacitor.

**18.** The common mode current controller according to any one of claims 15 to 17, wherein the inverter comprises a direct current-direct current DC-DC converter and a direct current-alternating current DC-AC converter, and the common mode current controller is between the DC-DC converter and the DC-AC converter.

**19.** The common mode current controller according to any one of claims 15 to 17, wherein the common mode current controller is further configured to control release of a residual charge of a Y capacitor at a terminal of the inverter.

**20.** The common mode current controller according to any one of claims 15 to 17, wherein the inverter is a grid-tied inverter of a photovoltaic power generation system, and the common mode current controller is configured to control a magnitude of a common mode current generated when the photovoltaic power generation system is grid-tied.

**21.** A common mode current controller of an inverter, wherein the common mode current controller is connected between a direct current busbar capacitor of the inverter and a direct current input voltage source of the inverter, a positive terminal and a negative terminal of the direct current busbar capacitor are respectively connected to a positive terminal and a negative terminal of the direct current input voltage source, and the common mode current controller comprises:

a first switch, wherein one end of the first switch is connected to the positive terminal of the direct current busbar capacitor;
a second switch, wherein one end of the second switch is connected to the negative terminal of the direct current busbar capacitor; and
an impedance correction circuit, wherein one end of the impedance correction circuit is grounded, and the other end of the impedance correction circuit is connected to both the other end of the first switch and the other end of the second switch;
the common mode current controller is configured to: when a midpoint-to-ground voltage of the direct current busbar capacitor is greater than a first threshold, close the first switch, and open the second switch, so that the impedance correction circuit and a positive terminal part of an intrinsic ground impedance part of the direct current busbar capacitor are connected in parallel between the positive terminal of the direct current busbar capacitor and the ground, to reduce a magnitude of positive terminal-to-ground equivalent impedance of the direct current busbar capacitor;
the common mode current controller is configured to: when the midpoint-to-ground voltage of the direct current busbar capacitor is less than a second threshold, close the second switch, and open the first switch, so that the impedance correction circuit and a negative terminal part of the intrinsic ground impedance part of the direct current busbar capacitor are connected in parallel between the negative terminal of the direct current busbar capacitor and the ground, to reduce a magnitude of negative terminal-to-ground equivalent impedance of the direct current busbar capacitor; and
the common mode current controller adjusts impedance matching between the positive terminal-to-ground equivalent impedance of the direct current busbar capacitor and the negative terminal-to-ground equivalent impedance of the direct current busbar capacitor, so that the inverter can pre-control a magnitude of a common mode current generated when the inverter is grid-tied.

**22.** The common mode current controller according to claim 21, wherein the midpoint-to-ground voltage of the direct current busbar capacitor is determined based on a positive terminal voltage of the direct current busbar capacitor and a negative terminal voltage of the direct current busbar capacitor.

**23.** The common mode current controller according to claim 21, wherein an impedance value of the impedance correction circuit is adjustable, and the impedance value of the impedance correction circuit is adjusted, so that the positive terminal-to-ground equivalent impedance of the direct current busbar capacitor matches the negative terminal-to-ground equivalent impedance of the direct current busbar capacitor.

**24.** The common mode current controller according to any one of claims 21 to 23, wherein the inverter comprises a direct current-direct current DC-DC converter and a direct current-alternating current DC-AC converter, and the common mode current controller is between the DC-DC converter and the DC-AC converter.

**25.** The common mode current controller according to any one of claims 21 to 23, wherein the common mode current controller is further configured to control release of a residual charge of a Y capacitor at a terminal of the inverter.

**26.** The common mode current controller according to any one of claims 21 to 23, wherein the inverter is a grid-tied inverter of a photovoltaic power generation system, and the common mode current controller is configured to control a magnitude of a common mode current generated when the photovoltaic power generation system is grid-tied.

**27.** A common mode current control method for an inverter, wherein a positive terminal and a negative terminal of a direct current busbar capacitor of the inverter are respectively connected to a positive terminal and a negative terminal of a direct current input voltage source of the inverter, and the common mode current control method comprises:

obtaining a midpoint-to-ground voltage of the direct current busbar capacitor;
introducing an impedance correction circuit when the midpoint-to-ground voltage exceeds a threshold range, wherein the impedance correction circuit and at least a part of an intrinsic ground impedance part of the direct current busbar capacitor are connected in parallel between one terminal in the positive terminal and the negative terminal of the direct current busbar capacitor and the ground, to reduce a magnitude of positive terminal-to-ground equivalent impedance of the direct current busbar capacitor or a magnitude of negative terminal-to-ground equivalent impedance of the direct current busbar capacitor; and
adjusting impedance matching between the positive terminal-to-ground equivalent impedance of the direct current busbar capacitor and the negative terminal-to-ground equivalent impedance of the direct current busbar capacitor, so that the inverter can pre-control a magnitude of a common mode current generated when the inverter is grid-tied.

**28.** The common-mode current control method according to claim 27, wherein the common mode current control method further comprises:

separately sampling a positive terminal voltage and a negative terminal voltage of the direct current busbar capacitor; and
obtaining the midpoint-to-ground voltage based on the positive terminal voltage and the negative terminal voltage of the direct current busbar capacitor.

**29.** The common mode current control method according to claim 27, wherein the introducing an impedance correction circuit when the midpoint-to-ground voltage exceeds a threshold range comprises:
introducing the impedance correction circuit when the midpoint-to-ground voltage is greater than a first threshold, wherein the impedance correction circuit and a positive terminal part of the intrinsic ground impedance part of the direct current busbar capacitor are connected in parallel between the positive terminal of the direct current busbar capacitor and the ground, to reduce the magnitude of the positive terminal-to-ground equivalent impedance of the direct current busbar capacitor.

**30.** The common mode current control method according to claim 27, wherein the introducing an impedance correction circuit when the midpoint-to-ground voltage exceeds a threshold range comprises:
introducing the impedance correction circuit when the midpoint-to-ground voltage is less than a first threshold, wherein the impedance correction circuit and a negative terminal part of the intrinsic ground impedance part of the direct current busbar capacitor are connected in parallel between the negative terminal of the direct current busbar capacitor and the ground, to reduce the magnitude of the negative terminal-to-ground equivalent impedance of the direct current busbar capacitor.

**31.** The common mode current control method according to any one of claims 27 to 30, wherein an impedance value of the impedance correction circuit is adjustable, and the impedance value of the impedance correction circuit is adjusted, so that the positive terminal-to-ground equivalent impedance of the direct current busbar capacitor matches the negative terminal-to-ground equivalent impedance of the direct current busbar capacitor.

**32.** The common mode current control method according to any one of claims 27 to 30, wherein the inverter comprises a direct current-direct current DC-DC converter and a direct current-alternating current DC-AC converter, and the impedance correction circuit is between the DC-DC converter and the DC-AC converter.

33. The common mode current control method according to any one of claims 27 to 30, wherein the inverter is a grid-tied inverter of a photovoltaic power generation system, and the common mode current control method is used to control a magnitude of a common mode current generated when the photovoltaic power generation system is grid-tied.

34. A photovoltaic power generation system, wherein the photovoltaic power generation system comprises a photovoltaic module, a direct current-alternating current inverter circuit, and a grid-tied filter; the direct current-alternating current inverter circuit is coupled between the photovoltaic module and the grid-tied inverter; and the photovoltaic power generation system further comprises the common mode current controller according to any one of claims 1 to 5, 9 to 11, 15 to 17, 21 to 23, or 27 to 30, configured to control the direct current-alternating current inverter circuit.

EP 4 175 167 A1

**FIG. 1**

FIG. 2

FIG. 3

FIG. 4

FIG. 5

FIG. 6

| | |
|---|---|
| Obtain a midpoint-to-ground voltage of a direct current busbar capacitor of an inverter | S700 |
| Compare the midpoint-to-ground voltage and each of a first threshold and a second threshold | S702 |
| Introduce a first impedance correction circuit when the midpoint-to-ground voltage is greater than the first threshold | S704 |
| Introduce a second impedance correction circuit when the midpoint-to-ground voltage is less than the second threshold | S706 |

FIG. 7

## INTERNATIONAL SEARCH REPORT

| International application No. |
|---|
| **PCT/CN2021/106045** |

**A. CLASSIFICATION OF SUBJECT MATTER**

H02S 40/32(2014.01)i

According to International Patent Classification (IPC) or to both national classification and IPC

**B. FIELDS SEARCHED**

Minimum documentation searched (classification system followed by classification symbols)

H02S; G01R

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 华为, 光伏, 逆变, 共模, 漏电流, 对地, 阻抗, 母线, 电阻, 开关, 并网, 并联, 对称, 平衡, 均衡, 匹配, bus+, invert+, common 1w mod+, leadag+ 1w current+, common 1w current+, residual 1w current+, ground+, impedanc+, resistor?, PV, discharg+, balanc+

**C. DOCUMENTS CONSIDERED TO BE RELEVANT**

| Category* | Citation of document, with indication, where appropriate, of the relevant passages | Relevant to claim No. |
|---|---|---|
| X | CN 103033689 A (SHOURUI (BEIJING) INVESTMENT MANAGEMENT GROUP CO., LTD.) 10 April 2013 (2013-04-10)<br>description, paragraphs [0053]-[0097], and figures 2-7 | 1-34 |
| X | CN 110426557 A (JIANGSU YUNYI ELECTRIC CO., LTD.) 08 November 2019 (2019-11-08)<br>description, paragraphs [0023]-[0038], and figures 1-3 | 1-34 |
| A | CN 110108987 A (ZHUHAI RUITE ELECTRICAL EQUIPMENT CO., LTD.) 09 August 2019 (2019-08-09)<br>entire document | 1-34 |
| A | CN 105717426 A (SHANDONG LUNENG INTELLIGENT TECHNOLOGY CO., LTD.) 29 June 2016 (2016-06-29)<br>entire document | 1-34 |
| A | CN 107994861 A (XIAMEN KEHUA HENGSHENG CO., LTD.; ZHANGZHOU KEHUA TECHNOLOGY CO., LTD.) 04 May 2018 (2018-05-04)<br>entire document | 1-34 |

☑ Further documents are listed in the continuation of Box C.　　☑ See patent family annex.

| | |
|---|---|
| *　Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 September 2021** | **15 October 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2021/106045** |

**C.     DOCUMENTS CONSIDERED TO BE RELEVANT**

| Category* | Citation of document, with indication, where appropriate, of the relevant passages | Relevant to claim No. |
|---|---|---|
| A | JP 5514842 B2 (HIKARI SHOKO K. K.) 04 June 2014 (2014-06-04)<br>    entire document | 1-34 |

**INTERNATIONAL SEARCH REPORT**
Information on patent family members

International application No.

**PCT/CN2021/106045**

| Patent document cited in search report | | | Publication date (day/month/year) | Patent family member(s) | | | Publication date (day/month/year) |
|---|---|---|---|---|---|---|---|
| CN | 103033689 | A | 10 April 2013 | CN | 103033689 | B | 25 February 2015 |
| CN | 110426557 | A | 08 November 2019 | CN | 210665879 | U | 02 June 2020 |
| CN | 110108987 | A | 09 August 2019 | CN | 210514516 | U | 12 May 2020 |
| CN | 105717426 | A | 29 June 2016 | None | | | |
| CN | 107994861 | A | 04 May 2018 | None | | | |
| JP | 5514842 | B2 | 04 June 2014 | JP | 2013148401 | A | 01 August 2013 |

Form PCT/ISA/210 (patent family annex) (January 2015)

**EP 4 175 167 A1**

**Patent documents cited in the description**

- CN 202010687357